# EUROPEAN PATENT APPLICATION

(11) **EP 4 794 429 A1**
(43) Date of publication of application: **19.08.2026**
(21) Application number: 24881182.0
(22) Date of filing: 09.08.2024
(51) Int. Cl.: H04W 72/40

(54) **COMMUNICATION METHOD, APPARATUS, AND SYSTEM**

(30) Priority: 25.10.2023 CN 202311391857
(71) Applicant: HUAWEI TECHNOLOGIES CO., LTD., Shenzhen 518129 (CN)
(72) Inventor: LIU, Yating, Shenzhen, Guangdong 518129 (CN); ZHANG, Yi, Shenzhen, Guangdong 518129 (CN); SU, Hongjia, Shenzhen, Guangdong 518129 (CN); QI, Hong, Shenzhen, Guangdong 518129 (CN)
(74) Representative: Thun, Clemens
(86) International application number: PCT/CN2024/111166
(87) International publication number: WO 2025/086813

(57) **Abstract**

This application relates to a communication method, apparatus, and system. A first terminal device determines a first resource within a resource selection window in a first resource set, where the first resource is used to send a first sidelink reference signal, and the first resource set is a dedicated resource set for a sidelink reference signal. The first terminal device then sends first information to a second terminal device to indicate the first resource, and subsequently sends the first sidelink reference signal on the first resource. Embodiments of this application provide a resource set used to send a reference signal. For example, a resource in the resource set may be used to send a reference signal but not to send data. As a result, the data and the reference signal may be sent on separate resources, thereby reducing impact of reference signals on data receiving quality.

## Description

### CROSS-REFERENCE TO RELATED APPLICATIONS

This application claims priority to Chinese Patent Application No. 202311391857.6, filed with the China National Intellectual Property Administration on October 25, 2023 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

In the existing frequency range (frequency range, FR) 1, the configuration of a sidelink (sidelink, SL) channel state information reference signal (sidelink channel state information-reference signal, CSI-RS) is selected by a transmitting (TX) user equipment (user equipment, UE) and provided to a receiving (RX) UE via a PC5-radio resource control (radio resource control, RRC) message. The SL CSI-RS configuration includes information such as a resource mapping mode and a quantity of antenna ports for an SL CSI-RS. In new radio (new radio, NR) vehicle to everything (vehicle to everything, V2X) communications, a resource mapping of an SL CSI-RS within a physical resource block (physical resource block, PRB) is based on a CSI-RS resource mapping mode in NR Uu. Based on the CSI-RS resource mapping mode, the SL CSI-RS supports up to two antenna ports (for example, an SL in NR V2X may support up to two streams in a physical sidelink shared channel (physical sidelink shared channel, PSSCH)), and has a frequency domain density of 1. In other words, one SL CSI-RS is configured on each resource block (resource block, RB).

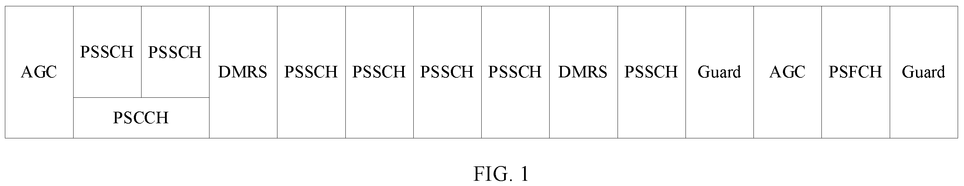

FIG. 1 shows a diagram of a slot (slot) structure for an SL. The slot includes signals such as automatic gain control (automatic gain control, AGC), a physical sidelink control channel (physical sidelink control channel, PSCCH), a PSSCH, and a demodulation reference signal (demodulation reference signal, DMRS), and may also include a guard (guard) interval. The SL CSI-RS supports only unicast transmission and is sent with data in the PSSCH within the slot. In addition, the SL CSI-RS is not transmitted on an orthogonal frequency division multiplexing (orthogonal frequency division multiplexing, OFDM) symbol (symbol) including the PSCCH, second stage (2nd stage) sidelink control information (sidelink control information, SCI), or the DMRS.

In FR2, a device may send a signal through a beam. Unlike in FR1, a UE in FR2 may send SL CSI-RSs on a plurality of OFDM symbols within a slot, different SL CSI-RSs may correspond to different beam directions. These reference signals in different beam directions may affect receiving quality of a PSSCH.

### SUMMARY

Embodiments of this application provide a communication method, apparatus, and system to reduce impact of a reference signal on data receiving.

According to a first aspect, a communication method is provided. The method may be performed by a terminal device, performed by another device including a function of the terminal device, or performed by a chip system (or a chip) or another functional module. The chip system or the functional module can implement the function of the terminal device, and the chip system or the functional module is, for example, disposed in the terminal device. The terminal device is, for example, a first terminal device. In the following descriptions, an example in which the method is performed by the first terminal device is used. The method includes: determining a first resource within a resource selection window in a first resource set, where the first resource is used to send a first sidelink reference signal, and the first resource set is a dedicated resource set for a sidelink reference signal; sending first information to a second terminal device, where the first information indicates the first resource; and sending the first sidelink reference signal on the first resource.

This embodiment of this application provides a resource set used to send a reference signal. The resource set may include a dedicated resource used to send a reference signal, or the resource set may be a resource set dedicated to sending a reference signal. For example, a resource in the resource set may be used to send a reference signal but not to send data. As a result, the data and the reference signal may be sent on separate resources. For example, if the resource includes a time domain resource, the data and the reference signal may not be sent on a same time domain resource (for example, a same slot), thereby reducing impact of the reference signal on data receiving quality. The data herein includes, for example, information carried on one or more of a PSSCH, a PSCCH, or a physical sidelink feedback channel (physical sidelink feedback channel, PSFCH).

In an optional implementation, the first sidelink reference signal is used by the second terminal device to determine a communication beam between the first terminal device and the second terminal device. For example, the first sidelink reference signal is used for beam management, beam sweeping, or the like. The second terminal device may align the communication beam between the second terminal device and the first terminal device based on measurement on the first sidelink reference signal.

In an optional implementation, the first resource includes a first sub-resource and a second sub-resource, the first information includes first indication information and second indication information, the first indication information indicates a time domain resource position of the first sub-resource, and the second indication information indicates a time interval between a time domain resource of the first sub-resource and a time domain resource of the second sub-resource. This embodiment of this application defines the first resource set. The first resource set may include a resource in a resource pool and/or include a resource outside the resource pool, and the first information may be sent in the resource pool. Therefore, when indicating the time domain resource position of the first sub-resource, the first information may indicate an absolute time domain position of the first sub-resource, but does not indicate a time interval between the first sub-resource and the first information, so that a receive side of the first information can accurately determine the time domain position of the first sub-resource.

In an optional implementation, the first indication information is carried in an SFN or a DFN, and the SFN or the DFN indicates the time domain position of the first sub-resource; and the second indication information is carried in a time offset field, and the time offset field indicates the time interval between the time domain resource of the first sub-resource and the time domain resource of the second sub-resource. The first indication information needs to indicate the absolute time domain position of the first sub-resource, for example, by using the SFN or the DFN, or in another manner. This is not limited. The time domain position of the first sub-resource is determined, and then the time domain position of the second sub-resource can be determined based on the time interval between the first sub-resource and the second sub-resource. In other words, an absolute time domain position of the second sub-resource may not be indicated, to reduce indication overheads.

In an optional implementation, the first resource is a periodic resource, and the first information further indicates a periodicity of the first resource. The first resource may be an aperiodic resource, or may be a periodic resource.

In an optional implementation, the first information includes third indication information, and the third indication information indicates a starting frequency domain position of a frequency domain resource of the first resource. For example, a quantity of frequency domain units occupied by the first resource (or a quantity of frequency domain units occupied by a sub-resource in the first resource) may be predefined in a protocol, or may be configured when the first resource set is configured. Therefore, the first information only needs to indicate the starting frequency domain position of the first resource.

In an optional implementation, the third indication information further indicates a quantity of frequency domain units occupied by the first resource. It is equivalent to saying that the third indication information may indicate the starting frequency domain position of the frequency domain resource of the first resource and the quantity of frequency domain units occupied by the first resource. For example, the quantity may be autonomously determined by the first terminal device, so that scheduling flexibility can be improved.

In an optional implementation, the first information is included in first SCI or a first MAC CE. Alternatively, the first information may be included in information of another protocol layer.

In an optional implementation, the first information indicates an index of a resource unit to which the first resource belongs, the first resource set includes a plurality of resource units, and each of the plurality of resource units corresponds to one index. In this implementation, the first resource set is divided into a plurality of resource units in advance, so that the first resource can be indicated by the first information indicating the index of the resource unit to which the first resource belongs. This indication manner is simple, and also helps reduce indication overheads.

In an optional implementation, the index of the resource unit to which the first resource belongs is determined based on a first identifier in the first information, and the first identifier is a source identifier or a destination identifier of to-be-sent data, or an identifier of the first reference signal. For example, each UE may determine, based on a corresponding identifier, an index of a resource unit that should be selected by the UE. If one UE receives information (for example, first information) from another UE, the receiving UE may also determine, based on an identifier (for example, a first identifier) indicated by the information, a resource unit selected by the another UE. In this case, the information may not need to additionally indicate the resource unit selected by the another UE, to reduce indication overheads.

In an optional implementation, the index of the resource unit to which the first resource belongs is indicated by a first identifier in the first information and fourth indication information and/or fifth indication information in the first information, the fourth indication information indicates a time domain offset, the time domain offset is an offset of the first resource in the time domain relative to a resource unit corresponding to the first identifier, the fifth indication information indicates a frequency domain offset, the frequency domain offset is an offset of the first resource in the frequency domain relative to the resource unit corresponding to the first identifier, and the fourth indication information includes information indicating that the time domain offset is before or after the first resource in time domain; and the first identifier is a source identifier or a destination identifier of to-be-sent data, or an identifier of the first reference signal. If each UE determines an index of a resource unit by using an identifier, it is very likely that indexes of resource units corresponding to identifiers of different UEs are the same, and a resource conflict occurs. In this case, in addition to indicating the first identifier, the first information may further include the fourth indication information and/or the fifth indication information. That is, a resource unit actually selected by a first UE is indicated by the first identifier and the fourth indication information and/or the fifth indication information. In other words, the resource unit actually selected by the first UE is no longer a resource unit directly determined based on the first identifier. Therefore, if the resource unit directly determined based on the first identifier conflicts with a resource unit directly determined based on an identifier corresponding to another UE, a resource conflict can be avoided in this manner.

In an optional implementation, the method further includes: receiving second sidelink control information, where a resource unit determined based on the second sidelink control information is the same as the resource unit corresponding to the first identifier. For example, the first UE receives the second sidelink control information, and determines, based on the second sidelink control information, that a resource unit selected by a transmit side of the second sidelink control information is the same as the resource unit directly determined based on the first identifier. In this case, the first UE may avoid a resource conflict in the manner described in the foregoing paragraph.

In an optional implementation, the first information further includes sixth indication information, and the sixth indication information, when set to a first value, indicates that the index of the resource unit to which the first resource belongs is determined based on the first identifier. Whether the UE needs to determine the resource unit based on the identifier may be indicated by corresponding information, so that a manner of determining the resource unit by the UE is more flexible.

In an optional implementation, the method further includes: obtaining first configuration information, where the first configuration information is used to configure the first resource set, and the first configuration information includes information about a mapping relationship between positions and indexes of the plurality of resource units. For example, the first configuration information is predefined in a protocol, or is configured by a network device or a UE (for example, the first UE, a second UE, or a UE other than the first UE and the second UE), or is preconfigured in the first UE and the second UE.

In an optional implementation, the first sidelink reference signal includes a plurality of sidelink reference signals, at least one time domain sub-unit within a time domain unit included in the first resource is used to send part or all of the plurality of sidelink reference signals, and sidelink reference signals carried in different time domain sub-units in the at least one time domain sub-unit correspond to a same beam direction or different beam directions. The sidelink reference signal is, for example, used for beam management or beam sweeping. For example, a time domain unit may be used to send sidelink reference signals in different beam directions, so that sidelink reference signals in a large quantity of beam directions can be sent within short time, to improve beam management or beam sweeping efficiency.

In an optional implementation, the first sidelink reference signal includes one or more of the following: an SL SSB, an SL CSI-RS, or an SL DMRS. Alternatively, the first sidelink reference signal may further include another reference signal.

According to a second aspect, another communication method is provided. The method may be performed by a terminal device, performed by another device including a function of the terminal device, or performed by a chip system (or a chip) or another functional module. The chip system or the functional module can implement the function of the terminal device, and the chip system or the functional module is, for example, disposed in the terminal device. The terminal device is, for example, a second terminal device. In the following description, an example in which the method is performed by the second terminal device is used. The method includes: receiving first information, where the first information indicates a first resource, the first resource is used to send a first sidelink reference signal, the first resource belongs to a first resource set, and the first resource set is a resource set used to send a reference signal; and receiving the first sidelink reference signal on the first resource.

In an optional implementation, the method further includes: determining a communication beam between a first terminal device and the second terminal device based on the first sidelink reference signal.

In an optional implementation, the first resource includes a first sub-resource and a second sub-resource, the first information includes first indication information and second indication information, the first indication information indicates a time domain resource position of the first sub-resource, and the second indication information indicates a time interval between a time domain resource of the first sub-resource and a time domain resource of the second sub-resource.

In an optional implementation, the first indication information is carried in an SFN or a DFN, and the SFN or the DFN indicates the time domain position of the first sub-resource; and the second indication information is carried in a time offset field, and the time offset field indicates the time interval between the time domain resource of the first sub-resource and the time domain resource of the second sub-resource.

In an optional implementation, the first resource is a periodic resource, and the first information further indicates a periodicity of the first resource.

In an optional implementation, the first information includes third indication information, and the third indication information indicates a starting frequency domain position of a frequency domain resource of the first resource.

In an optional implementation, the third indication information further indicates a quantity of frequency domain units occupied by the first resource.

In an optional implementation, the first information is included in first SCI or a first MAC CE.

In an optional implementation, the first information indicates an index of a resource unit to which the first resource belongs, the first resource set includes a plurality of resource units, and each of the plurality of resource units corresponds to one index.

In an optional implementation, the index of the resource unit to which the first resource belongs is determined based on a first identifier in the first information, and the first identifier is a source identifier or a destination identifier of to-be-sent data, or an identifier of the first sidelink reference signal.

In an optional implementation, the index of the resource unit to which the first resource belongs is indicated by a first identifier in the first information and fourth indication information and/or fifth indication information in the first information, the fourth indication information indicates a time domain offset, the time domain offset is an offset of the first resource in the time domain relative to a resource unit corresponding to the first identifier, the fifth indication information indicates a frequency domain offset, the frequency domain offset is an offset of the first resource in the frequency domain relative to the resource unit corresponding to the first identifier, and the fourth indication information includes information indicating that the time domain offset is before or after the first resource in time domain; and the first identifier is a source identifier or a destination identifier of to-be-sent data, or an identifier of the first sidelink reference signal.

In an optional implementation, the first information further includes sixth indication information, and the sixth indication information, when set to a first value, indicates that the index of the resource unit to which the first resource belongs is determined based on the first identifier.

In an optional implementation, the method further includes: obtaining first configuration information, where the first configuration information is used to configure the first resource set, and the first configuration information includes information about a mapping relationship between positions and indexes of the plurality of resource units.

In an optional implementation, the first sidelink reference signal includes a plurality of sidelink reference signals, at least one time domain sub-unit within a time domain unit included in the first resource is used to send part or all of the plurality of sidelink reference signals, and sidelink reference signals carried in different time domain sub-units in the at least one time domain sub-unit correspond to a same beam direction or different beam directions.

In an optional implementation, the first sidelink reference signal includes one or more of the following: an SL SSB, an SL CSI-RS, or an SL DMRS.

For technical effects brought by the second aspect or the optional implementations, refer to descriptions of technical effects of the first aspect or the corresponding implementations.

According to a third aspect, a communication apparatus is provided. The communication apparatus may be the first terminal device in either of the first aspect and the second aspect. The communication apparatus has a function of the first terminal device. The communication apparatus is, for example, the first terminal device, a large device including the first terminal device, or a functional module, for example, a baseband apparatus or a chip system, in the first terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the processing unit is configured to perform channel access in an unlicensed frequency band; and the transceiver unit (or the sending unit) is configured to send SCI, where the SCI includes first information, the first information indicates that at least one of M bits in 2nd-stage SCI is a reserved bit, the M bits are bits used to carry channel occupancy time sharing information COT-SI, and M is a positive integer.

In an optional implementation, the processing unit is configured to determine a first resource within a resource selection window in a first resource set, where the first resource is used to send a first sidelink reference signal, and the first resource set is a dedicated resource set for a sidelink reference signal; the transceiver unit (or the sending unit) is configured to send first information to a second terminal device, where the first information indicates the first resource; and the transceiver unit (or the sending unit) is further configured to send the first sidelink reference signal on the first resource.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the function of the first terminal device in either of the first aspect and the second aspect.

According to a fourth aspect, a communication apparatus is provided. The communication apparatus may be the second terminal device in either of the first aspect and the second aspect. The communication apparatus has a function of the second terminal device. The communication apparatus is, for example, the second terminal device, a large device including the second terminal device, or a functional module, for example, a baseband apparatus or a chip system, in the second terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to descriptions in the third aspect.

In an optional implementation, the transceiver unit (or the receiving unit) is configured to receive first information, where the first information indicates a first resource, the first resource is used to send a first sidelink reference signal, the first resource belongs to a first resource set, and the first resource set is a resource set used to send a reference signal; and the transceiver unit (or the receiving unit) is further configured to receive the first sidelink reference signal on the first resource.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the function of the second terminal device in either of the first aspect and the second aspect.

According to a fifth aspect, a communication apparatus is provided. The communication apparatus may be a terminal device, or may be a chip or a chip system used in the terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first terminal device or the second terminal device in the foregoing aspects.

According to a sixth aspect, a communication system is provided, and includes a first terminal device and a second terminal device. The first terminal device is configured to perform the method performed by the first terminal device in the first aspect. The second terminal device is configured to perform the method performed by the second terminal device in the second aspect. For example, the first terminal device may be implemented by the communication apparatus in the third aspect or the fifth aspect, and the second terminal device may be implemented by the communication apparatus in the fourth aspect or the fifth aspect.

According to a seventh aspect, a computer-readable storage medium is provided. The computer-readable storage medium is configured to store a computer program or instructions. When the computer program or the instructions are run, the method performed by the first terminal device or the second terminal device in the foregoing aspects is implemented.

According to an eighth aspect, a computer program product including instructions is provided. When the computer program product runs on a computer, the methods in the foregoing aspects are implemented.

According to a ninth aspect, a chip system is provided, including a processor and an interface. The processor is configured to invoke instructions from the interface and run the instructions, to enable the chip system to implement the methods in the foregoing aspects.

### BRIEF DESCRIPTION OF DRAWINGS

FIG. 1 is a diagram of a slot structure of an SL;
FIG. 2 is a diagram of positions of SL CSI-RSs of two ports in a PRB;
FIG. 3A is a diagram of a P-1 state in a beam management process;
FIG. 3B is a diagram of a P-2 state in a beam management process;
FIG. 3C is a diagram of a P-3 state in a beam management process;
FIG. 4 is a diagram of an application scenario according to an embodiment of this application;
FIG. 5 is a flowchart of a communication method according to an embodiment of this application;
FIG. 6A and FIG. 6B are two diagrams of a resource unit included in a first resource set according to an embodiment of this application;
FIG. 7 is a diagram of selecting a resource by a UE according to an embodiment of this application;
FIG. 8A and FIG. 8B are two diagrams of frequency domain resource positions of a first reference signal and a first PSSCH according to an embodiment of this application;
FIG. 9 is a diagram in which first information indicates a time domain resource position and a frequency domain resource position of a first resource according to an embodiment of this application;
FIG. 10 is a diagram in which a field in first information indicates an index of a resource unit to which a first resource belongs according to an embodiment of this application;
FIG. 11A and FIG. 11B are two diagrams of a resource conflict resolution manner according to an embodiment of this application;
FIG. 12 is a diagram of an apparatus according to an embodiment of this application; and
FIG. 13 is a diagram of another apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

In embodiments of this application, unless otherwise specified, a quantity of a noun indicates "a singular noun or a plural noun", namely, "one or more". "At least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. In addition, step numbers in embodiments described in this application are merely intended to distinguish between different steps, but are not intended to limit a sequence of the steps. For example, S501 may be performed before S502, may be performed after S502, or may be simultaneously performed with S502.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, a terminal device in a scenario, including but not limited to the following scenarios: a sensing scenario, cellular communication, device-to-device (device-to-device, D2D) communication, vehicle to everything (vehicle to everything, V2X), machine-to-machine/machine type communications (machine-to-machine /machine-type communications, M2M/MTC), the internet of things (internet of things, IoT), virtual reality (virtual reality, VR), augmented reality (augmented reality, AR), industrial control (industrial control), self driving (self driving), telemedicine (remote medical), smart grid (smart grid), smart furniture, smart office, smart wearable, smart transportation, smart city (smart city), uncrewed aerial vehicle, robot, and indoor commercial scenarios (such as mobile phone projection, file sharing, and video transmission from a mobile phone to VR glasses). The terminal device may also be referred to as a V2X device when used in V2X, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road site unit, RSU). Alternatively, the terminal device may be a device in D2D communication, for example, an electricity meter or a water meter.

In addition, the terminal device in embodiments of this application may alternatively be a terminal device in an IoT system. An IoT is an important part of future development of information technologies, and is mainly technically characterized in that things are connected to networks by using communication technologies, to implement intelligent networks of human-machine interconnection and interconnection between things.

If various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board unit, OBU). The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle may use the vehicle-mounted module, the vehicle-mounted assembly, the vehicle-mounted component, the vehicle-mounted chip, or the vehicle-mounted unit that is built in the vehicle, to implement the method in this application.

The terminal device may sometimes be referred to as a UE, a terminal, an access station, a UE station, a remote station, a wireless communication device, a user apparatus, or the like.

In embodiments of this application, a communication apparatus configured to implement a function of the terminal device may be a terminal device, or may be an apparatus that can support the terminal device in implementing the function, for example, a chip system. The apparatus may be installed in the terminal device. In the technical solutions provided in embodiments of this application, the technical solutions provided in embodiments of this application are described by using an example in which the apparatus configured to implement the function of the terminal device is the terminal device. In addition, for ease of description, an example in which the terminal device is a UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next generation NodeB (the next generation NodeB, gNodeB)/gNB), a transmission reception point (transmission reception point, TRP), a base station evolved after a 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, the network device in the V2X technology may be an RSU. The following provides descriptions by using an example in which the access network device is the base station. The base station may communicate with the terminal device, or may communicate with the terminal device via a relay station. The terminal device may communicate with the plurality of base stations in different access technologies. The core network device is configured to implement functions such as mobility management, data processing, session management, and policy and charging. Names of devices that implement core network functions in systems of different access technologies may be different. This is not limited in embodiments this application. A 5th generation (5th generation, 5G) mobile communication technology system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus that can support the network device in implementing the function, for example, a chip system. The apparatus may be installed in the network device. In the technical solutions provided in embodiments of this application, the technical solutions provided in embodiments of this application are described by using an example in which the apparatus configured to implement the function of the network device is the network device.

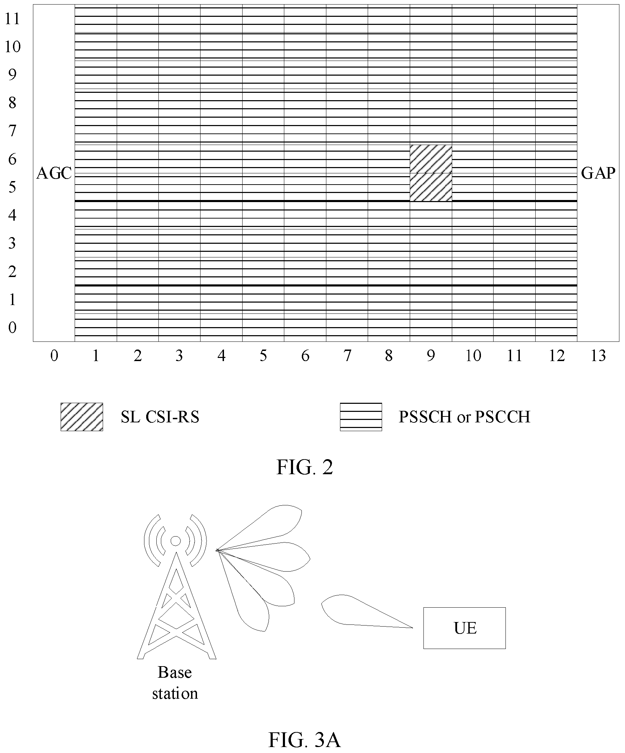

FIG. 1 is a diagram of a structure of a slot of an SL. The slot includes signals such as AGC, a PSCCH, a PSSCH, and a DMRS, and may further include a guard interval. The SL CSI-RS supports only unicast transmission, and is sent with data in the PSSCH in the slot. In addition, the SL CSI-RS is not transmitted on an OFDM symbol including the PSCCH, 2nd-stage SCI, or the DMRS. In each PRB in the PSSCH, a same mode is used for the SL CSI-RS. FIG. 2 is a diagram of positions of SL CSI-RSs of two ports in a PRB. A last symbol in FIG. 2 represents a gap (GAP). FIG. 2 shows one PRB. A PSSCH may occupy a plurality of PRBs (for example, in FIG. 2, the PSSCH occupies 30 PRBs), and each PRB may have a same format.

Different from FR1, in FR2, a device may send a signal through a beam. Table 1 shows frequency range definitions of FR1 and FR2.

**Table 1**

| Frequency range | Associated frequency |
|---|---|
| FR1 | 410 MHz to 7125 MHz |
| FR2 | 24250 MHz to 52600 MHz |

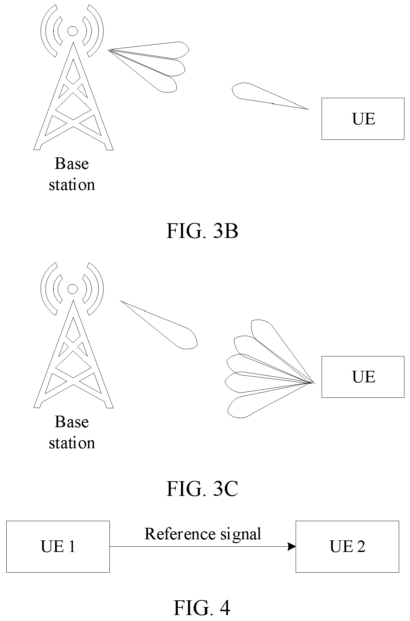

Beam management is an important technology proposed in 5G NR for FR2, is a process in which a base station and a UE obtain and maintain a beam set used for sending and receiving, and is a reference workflow for beamforming in a multiple-input multiple-output (multiple-input multiple-output, MIMO) system. Beam management may be classified into three states based on working states. Operations in the states are as follows:
P-1: The UE measures a transmit beam set of the base station, and selects a transmit beam of the base station and a receive beam of the UE from the transmit beam set. FIG. 3A is a diagram of P-1.
P-2: Based on the beams selected in P-1, the UE measures a smaller transmit beam set (fine beam) of the base station, to improve the transmit beam of the BS. The smaller transmit beam set may include a part of the beams selected in P-1. FIG. 3B is a diagram of P-2.
P-3: The UE measures, by using different receive beams, a same transmit beam improved based on P-2, to improve the receive beam of the UE. FIG. 3C is a diagram of P-3.

In FR2, the UE may send SL CSI-RSs on a plurality of OFDM symbols in one slot, and different SL CSI-RSs may correspond to different beam directions. For example, the UE may send a plurality of SL CSI-RSs in different beam directions in one slot in a beam management process, or may send a plurality of SL CSI-RSs in different beam directions in one slot in another communication process. It can be learned from FIG. 1 that an SL adjusts a received signal strength by performing AGC on an entire frequency band by using a 1^{st} OFDM symbol in the slot, to ensure data receiving in the entire slot (a transmit power in the entire slot does not change). In FR2, if a sending UE sends SL CSI-RSs in a plurality of beam directions in one slot, a change of the beam direction causes a receive power of a UE that receives data to rapidly change in one slot. AGC of a 1^{st} OFDM symbol in the slot cannot accurately reflect a received signal strength of the entire slot. Therefore, a receive power determined based on the AGC by the UE that receives the data may not adapt to a transmit power of a PSSCH in the slot, and consequently, receiving quality of the UE that receives the data for the PSSCH declines.

In view of this, embodiments of this application provide a resource set used to send a reference signal. A resource in the resource set may be used to send a reference signal. It may be understood as that the resource in the resource set may be used to send a reference signal but not to send data. As a result, the data and the reference signal may be sent on separate resources. For example, if the resource includes a time domain resource, the data and the reference signal may not be sent on a same time domain resource, thereby reducing impact of the reference signal on data receiving quality.

The technical solutions provided in embodiments of this application may be applied to a 4th generation (the 4th generation, 4G) mobile communication technology system, for example, a long term evolution (long term evolution, LTE) system, or may be applied to a 5th generation (the 5th generation, 5G) mobile communication technology system, for example, an NR system, or may be applied to a next generation mobile communication system or another similar communication system, for example, a 6th generation (the 6th generation, 6G) mobile communication technology system. This is not specifically limited. In addition, the technical solutions provided in embodiments of this application may be applied to the SL. For example, the SL-U belongs to a D2D scenario such as an NR-D2D scenario, or belongs to a V2X scenario such as an NR-V2X scenario. For example, embodiments of this application may be used in fields such as factory manufacturing, house-wide intelligence, intelligent driving, assisted driving, intelligent connected vehicles, or indoor commercial scenarios. For example, embodiments of this application may be applied to a high frequency band, for example, FR2.

FIG. 4 shows a communication network architecture to which embodiments of this application are applied. FIG. 4 includes a UE 1 and a UE 2. The UE 1 and the UE 2 may communicate with each other on an SL. For example, the UE 1 may send a reference signal, and the UE 2 may receive the reference signal from the UE 1; or the UE 1 may send a reference signal and data on different resources respectively, and the UE 2 may receive the reference signal and the data from the UE 1. The UE 1 and/or the UE 2 may be located within a coverage area of a network device, or may be located outside the coverage area of the network device. If the UE 1 and the UE 2 are located within the coverage area of the network device, the two UEs may be located within a coverage area of a same network device, or may be located within coverage areas of different network devices. The UE 1 and the UE 2 can perform the method provided in embodiments of this application.

In addition, embodiments of this application may further involve more UEs. For example, in addition to the UE 2, more UEs may receive the reference signal and/or the data from the UE 1. This is not limited.

In addition, embodiments of this application may further involve more network devices, or may not involve a network device. This is not limited.

To better describe embodiments of this application, the following describes, with reference to the accompanying drawings, the method provided in embodiments of this application.

In embodiments of this application, the reference signal is, for example, an SL reference signal, and the SL reference signal includes, for example, one or more of the following: an SL CSI-RS, an SL synchronization signal and physical broadcast channel (physical broadcast channel, PBCH) block (synchronization signal/PBCH block, SSB), or an SL DMRS. Alternatively, the SL reference signal may further include another reference signal. In embodiments of this application, a time domain unit is, for example, a subframe (subframe), a slot, a mini-slot (mini-slot), or an OFDM symbol group, and a time domain sub-unit is a next-level time domain unit included in the time domain unit. For example, the time domain unit is a subframe, and the time domain sub-unit is a slot, a mini-slot, an OFDM symbol group, or an OFDM symbol; or the time domain unit is a slot, and the time domain sub-unit is a mini-slot, an OFDM symbol group, or an OFDM symbol; or the time domain unit is a mini-slot, and the time domain sub-unit is an OFDM symbol group or an OFDM symbol; or the time domain unit is an OFDM symbol group, and the time domain sub-unit is an OFDM symbol. One OFDM symbol group may include one or more OFDM symbols. For simplicity, the OFDM symbol is briefly referred to as a symbol below.

In embodiments of this application, a frequency domain unit is, for example, a subchannel (subchannel), a resource block (resource block, RB) set (set), a physical resource block (physical resource block, PRB), a carrier, or a subcarrier.

Unless otherwise specified below, in the accompanying drawings corresponding to embodiments of this application, steps represented by dashed lines are all optional steps.

The methods provided in embodiments of this application may be applied to the network architecture shown in FIG. 4. For example, a first UE in embodiments of this application may be the UE 1 in FIG. 4, and a second UE in embodiments of this application may be the UE 2 in FIG. 4.

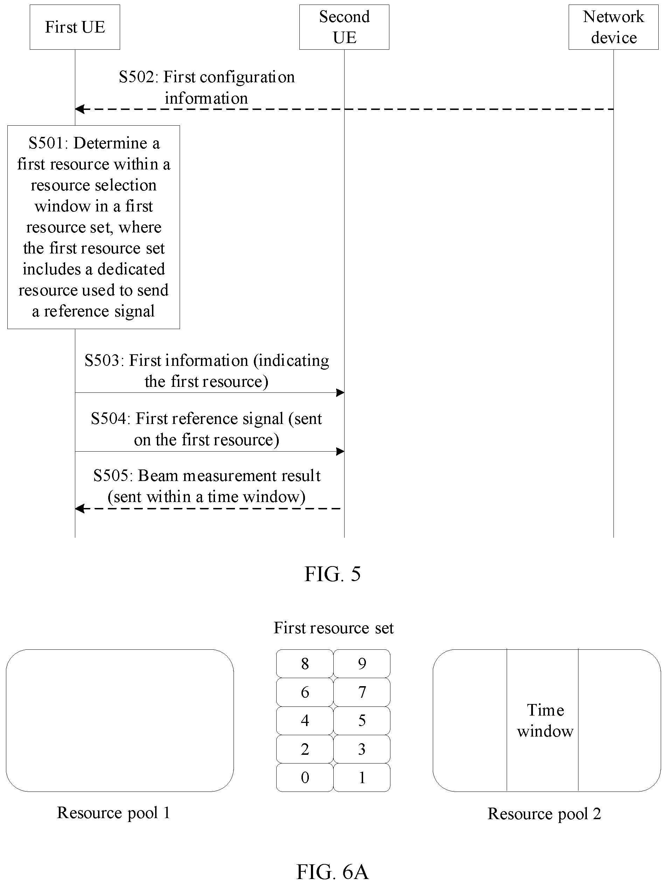

An embodiment of this application provides a communication method. FIG. 5 is a flowchart of the method.

S501: A first UE determines a first resource within a resource selection window in a first resource set.

The first resource is used to send a first reference signal. For example, the first UE operates in autonomous resource selection mode(mode 2), where the first UE autonomously selects a resource from a resource pool, without resource scheduling by a network device. In this embodiment of this application, if the first UE needs to send a reference signal, the first UE selects a resource from the first resource set. Accordingly, the resource selection window is not a conventional resource selection window (for example, a resource selection window (resource selection window) defined in Release 16), but a resource selection window in the first resource set. The resource selection window has its time domain start position and time both in the first resource set and spans a first duration in the time domain. The resource selection window includes, for example, part or all of resources in the first resource set. The first resource set is described below. To send the first reference signal, the first UE may select a resource, for example, the first resource, within the resource selection window. The first resource may include one or more resources, which may be referred to as sub-resources for clarity. For example, the first resource includes one or more sub-resources. Each sub-resource may be used to send one reference signal, and the first reference signal may also include one or more reference signals.

For example, a time domain unit is a slot. Suppose the first UE triggers resource selection in a slot n. The following describes a resource selection procedure of the first UE. The resource described in the following resource selection procedure includes a time domain resource and a frequency domain resource. Before detailing the resource selection procedure, a structure of the first resource set in this embodiment of this application is first described.

Optionally, the resource included in the first resource set may adopt an existing structure. For example, the first resource set may include a plurality of physical resource blocks (physical resource block, PRB) or a plurality of resource elements (resource element, CE).

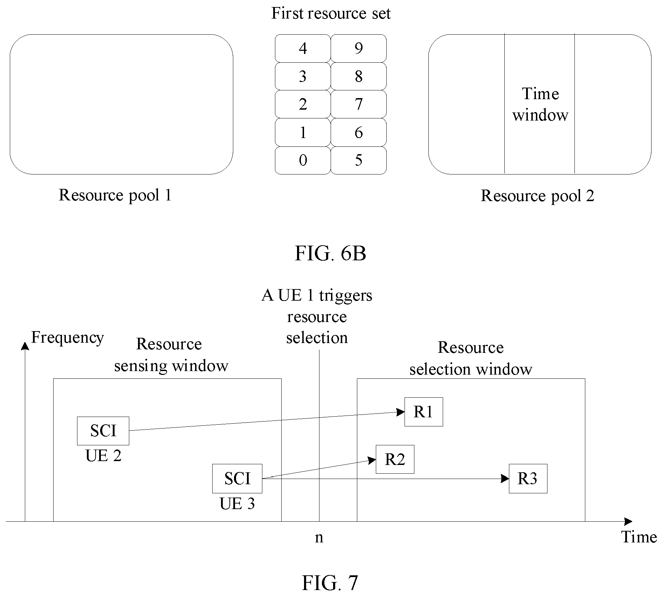

Alternatively, optionally, the first resource set may include a plurality of resource units. For example, the first resource set includes T * F resource units, where T represents a quantity of time domain units included in resource units in the first resource set, and F represents a quantity of frequency domain units included in the resource units in the first resource set. FIG. 6A or FIG. 6B shows an example of the resource units included in the first resource set. Both FIG. 6A and FIG. 6B use an example in which the first resource set is located outside the resource pool, with T = 2 and F = 5. For example, if the first resource set is configured by a network device or a UE, the network device or the UE may divide resources in the first resource set into T * F resource units in advance; if the first resource set is predefined in a protocol, the protocol may predefine the T * F resource units included in the first resource set. For example, a resource unit includes one time domain unit in the time domain, and includes one frequency domain unit in the frequency domain. For example, the time domain unit is a slot, and the frequency domain unit is a subchannel. In this case, a resource unit includes one slot and one subchannel within the slot. As noted earlier, the first resource may include one or more sub-resources, and each sub-resource may include one or more resource units.

Each of the plurality of resource units in the first resource set may be assigned an index (index). The operation of assigning an index for the resource unit in the first resource set may be set according to a rule specified by the network device or the UE (for example, the first UE, a second UE, or another UE) or predefined in the protocol. For example, a time-first-frequency-second numbering scheme yields resource unit indexes 0 to 9 shown in FIG. 6A. , if another rule is a numbering manner of frequency domain first and then time domain Conversely, a frequency-first-time-second numbering scheme yields resource unit indexes 0 to 9 shown in FIG. 6B.

The following describes a resource selection procedure of the first UE.
1. The first UE determines, in the first resource set, a candidate resource *R_{x,y}* at a granularity of one time domain unit and ${L}_{subCH}^{RS}$ contiguous frequency domain units. ${L}_{subCH}^{RS}$ is, for example, a quantity of frequency domain units included in a frequency domain resource used to send a reference signal, or a quantity of frequency domain units included in a frequency domain sub-resource used to send a reference signal. For example, the first UE may determine the resource selection window in the first resource set, and the candidate resource *R_{x,y}* may be within the resource selection window. 2. The first UE determines a resource sensing window (also referred to as a resource sensing window) corresponding to the resource selection window. 3. The first UE initializes an available resource set *S_{A}*, and *S_{A}* includes all resources within the resource selection window.

4. The first UE excludes the following resource from *S_{A}*: slots reserved for all periodic resources configured in a resource pool corresponding to a non-sensing slot (a sending slot) within the resource sensing window. The non-sensing slot may be understood as a slot in which the first UE sends data, or may be understood as a slot used by the first UE to send data. Therefore, the first UE has no sensing result in the slot. To avoid a conflict, the first UE may assume that there is reservation information sent by another UE in the slot (for example, the reservation information is carried by using SCI), and a resource for periodic transmission may be reserved in the slot. In this case, the first UE needs to exclude resources corresponding to all available periodicities configured in all resource pools (because all frequency domain resources are possible, the entire slot is excluded). Step 4 is an optional step.

5. The first UE continues to exclude the following time-frequency resource from *S_{A}*: received SCI or a received medium access control (medium access control, MAC) control element (control element, CE) is successfully decoded, an RSRP obtained by measuring a physical sidelink shared channel (physical sidelink shared channel, PSSCH) demodulation reference signal (demodulation reference signal, DMRS) of a resource reserved by using the SCI or the MAC CE is higher than a corresponding RSRP threshold, and the resource reserved by using the SCI or the MAC CE is within the resource selection window, where the resource reserved by using the SCI or the MAC CE may be used for retransmission and/or periodic transmission.

The first UE may report finally determined *S_{A}* to a higher layer of the first UE, for example, a medium access control (medium access control, MAC) layer. The first UE randomly selects a resource from *S_{A}* to send the first reference signal. For example, the first UE selects a resource (*r*₀, *r*₁, *r*₂, ...).

If resource units are not obtained through division in the first resource set, the first UE may select, according to the foregoing process, a resource used to send the first reference signal within the resource selection window of the first resource set. For example, the first UE finally selects the first resource (for example, the first resource is the resource (*r*₀, *r*₁, *r*₂, ...)).

Alternatively, if resource units are obtained through division in the first resource set, the first UE may also select, according to the foregoing process, a resource used to send the first reference signal within the resource selection window of the first resource set. For example, the first UE finally selects the first resource (for example, the first resource is the resource (*r*₀, *r*₁, *r*₂, ...)). Alternatively, if resource units are obtained through division in the first resource set, the foregoing process may also change accordingly.

For example, if resource units are obtained through division in the first resource set, before performing step 5, the first UE may first determine, based on a first identifier, an index of a resource unit that should be selected by the first UE, where the resource unit is, for example, within the resource selection window. After determining the index, the first UE determines the corresponding resource unit. The first identifier is, for example, a source identifier (source ID) or a destination identifier (destination ID) of to-be-sent data, or an identifier of the first reference signal. For example, if the first UE is a data transmit side, the source identifier is an identifier of the first UE. For example, if the second UE is a data receive side, the source identifier is an identifier of the second UE. For example, a resource determined by the first UE based on the first identifier may meet the following relationship: $C = first identifier % \left(T*F\right)$

In the formula 1, C represents an index of a resource selected by the first UE, % represents a division modulo operation, T represents a quantity of time domain units included in resource units in the first resource set, and F represents a quantity of frequency domain units included in the resource units in the first resource set. Alternatively, a resource selected by the first UE may meet another relationship. This is not specifically limited.

If the first UE selects a resource by using an identifier, for different UEs, a resource used to send a reference signal may be selected in a same manner. For example, if the second UE needs to send a reference signal, the second UE may select a resource based on a second identifier, where the second identifier is, for example, a source identifier or a destination identifier of data to be sent by the second UE, or an identifier of a reference signal to be sent by the second UE. That is, different UEs select resources based on identifiers, and indexes of resource units to which the resources selected by the different UEs belong may be different or may be the same. Optionally, if the resource units to which the resources selected by the different UEs are the same, a resource conflict occurs. Therefore, optionally, to reduce occurrence of a transmission failure caused by the resource conflict, and the like, after determining the index of the resource unit based on the first identifier, the first UE may continue to determine whether the resource unit conflicts with a resource unit reserved by another UE, that is, determine whether the another UE has reserved the resource unit.

For example, the first UE receives information from another UE (where the information is, for example, SCI, for example, referred to as second SCI, or the information may be an SL MAC CE, or the information may be information of another protocol layer), and the another UE is, for example, the second UE, or a UE other than the first UE and the second UE. The information indicates an index of a resource unit used by the another UE to send a reference signal. If the index is the same as the index of the resource unit corresponding to the first identifier, a resource conflict occurs. Alternatively, if the resource unit determined by the first UE based on the first identifier is not reserved in information (for example, SCI or a MAC CE) received by the first UE from another UE, the first UE determines that no resource conflict occurs.

If no resource conflict occurs, the first UE may not need to perform step 5, but uses, as the finally selected resource used to send the first reference signal, the resource determined based on the first identifier. For example, the resource is the first resource, and the resource selection procedure ends.

Alternatively, if a resource conflict occurs, the first UE may perform step 5, which is equivalent to saying that the first UE gives up using the resource directly determined based on the first identifier, and reselects a resource within the resource selection window. In this case, the resource selected by the first UE in step 5 is the finally selected resource used to send the first reference signal. For example, the resource is the first resource.

For example, FIG. 7 is a diagram of performing resource selection by a UE. An example in which the UE is a UE 1 is used. According to the resource selection process described above, for example, the UE 1 performs resource sensing, and receives SCI from a UE 2 and SCI from a UE 3 within a resource sensing window. The SCI of the UE 2 indicates a resource R1, and the resource R1 is within a resource selection window of the UE 1. The SCI of the UE 3 indicates a resource R3, the resource R3 is within the resource selection window of the UE 1, and the resource R3 is, for example, used for retransmission. In addition, the SCI of the UE 3 further indicates a periodicity, indicating that the UE 3 reserves a periodic resource. For example, the periodic resource reserved by the UE 3 is the resource R3. The UE 1 triggers resource selection in a slot n. When performing resource selection, the UE 1 does not select the resources R1, R2, and R3, but selects a resource from remaining resources within the resource selection window.

The first resource set in embodiments of this application may be a set of dedicated resources configured for beam management (or beam sweeping), or the first resource set does not overlap a resource used to send data (for example, a PSSCH), or the first resource set may include a dedicated resource used to send a reference signal, or the first resource set may be a resource set dedicated to sending a reference signal. For example, a resource in the first resource set may be used to send a reference signal but not to send data (for example, not used to send a PSSCH). For example, that the first resource set does not overlap the resource used to send the data includes: A time domain resource in the first resource set does not overlap a time domain resource used to send data; or includes: A time domain resource in the first resource set does not overlap a time domain resource used to send data, and a frequency domain resource in the first resource set does not overlap a frequency domain resource used to send data. Optionally, all resources in the first resource set are used to send only a reference signal, and are not used to send data, for example, are used to send none of a PSSCH, a PSCCH, or a PSFCH; or all resources in the first resource set are used to send only a reference signal, and are not used to send other information other than the reference signal, where the other information includes, for example, data and/or control information.

For example, if the reference signal and the data (for example, the PSSCH) are sent in a same slot, based on a current slot structure, a receiving UE can perform AGC on an entire frequency band only by using a 1^{st} OFDM symbol in the slot, to adjust a received signal strength, so as to ensure data receiving in the entire slot. However, in FR2, a reference signal in the slot may be sent in a plurality of beam directions, and a change of the beam direction causes a receive power of the receiving UE to rapidly change in one slot. AGC of the 1^{st} OFDM symbol in the slot cannot accurately reflect a received signal strength of the entire slot. Therefore, a receive power determined by the receiving UE based on the AGC may not adapt to a transmit power of data in the slot, and consequently, receiving quality of the receiving UE for the data declines. In this embodiment of this application, the first resource set is set, to be dedicated to sending the reference signal. When sending the reference signal, the UE selects a resource from the first resource set instead of selecting a resource from resources used to send the data, and when sending the data, the UE selects a resource from the resources (for example, a resource pool) used to send the data instead of selecting a resource from the first resource set. Because the time domain resource included in the first resource set does not overlap the time domain resource used to send the data, the reference signal and the data are not sent in a same time domain resource (for example, a same slot), that is, the reference signal and the data are sent in different time domain resources (for example, slots). Therefore, impact of the reference signal on data receiving quality is reduced, so that both the reference signal and the data can have good receiving and sending quality.

For example, one first resource set may be set for a bandwidth part (bandwidth part, BWP). The first resource set may be in any resource pool in the BWP, or may be outside all resource pools in the BWP, or the first resource set may include resources in part or all of resource pools in the BWP. The resource pool configured for the first UE may be in the BWP. The first resource set may be configured by using first configuration information, and the first configuration information may be determined and sent by the network device. Optionally, this embodiment of this application may further include S502: The network device sends the first configuration information. Correspondingly, the first UE receives the first configuration information. S502 occurs, for example, before S501. Alternatively, the first configuration information may be determined by a UE (for example, the first UE, the second UE, or another UE). If the first configuration information is determined by a UE other than the first UE, S502 may be replaced with that a UE configured to determine the first configuration information sends the first configuration information. Correspondingly, the first UE receives the first configuration information. In FIG. 5, an example in which the network device sends the first configuration information is used. Alternatively, the first configuration information may be predefined in a protocol or preconfigured in part or all of UEs in the BWP. Optionally, the first UE obtains the first configuration information, and then may determine the resource selection window based on the first configuration information, to determine the first resource within the resource selection window.

Optionally, the first configuration information may include a bitmap (bitmap). Bits included in the bitmap may be in a one-to-one correspondence with time domain units included in a first resource pool, or bits included in the bitmap may be in a one-to-one correspondence with time domain units included in a first BWP, or bits included in the bitmap are in a one-to-one correspondence with part or all of time domain units other than all resource pools in a first BWP. The first resource pool is, for example, a resource pool configured for the first UE, and the first BWP is a BWP in which the first resource pool is located. For example, if the first resource set is in the first resource pool, bits included in the bitmap may be in a one-to-one correspondence with time domain units included in the first resource pool, or bits included in the bitmap may be in a one-to-one correspondence with time domain units included in the first BWP. Alternatively, if the first resource set is outside all resource pools in the first BWP, bits included in the bitmap are in a one-to-one correspondence with part or all of time domain units other than all the resource pools in the first BWP, or bits included in the bitmap may be in a one-to-one correspondence with time domain units included in the first BWP. Alternatively, if the first resource set includes time domain units in part or all of resource pools in the first BWP, or the first resource set includes time domain units in part or all of resource pools in the first BWP and includes part or all of time domain units other than all the resource pools in the first BWP, bits included in the bitmap may be in a one-to-one correspondence with time domain units included in the first BWP. When a value of a bit in the bitmap is a third value, it indicates that a time domain unit corresponding to the bit belongs to the first resource set. When a value of a bit in the bitmap is a fourth value or is not a third value, it indicates that a time domain unit corresponding to the bit does not belong to the first resource set.

Alternatively, the first configuration information may not include a bitmap, but may indicate one or more of the following: a start time domain position of a time domain resource included in the first resource set, a periodicity of a time domain resource included in the first resource set, a quantity (for example, represented as *N_{period}*) of resources (for example, time domain units) that are included in one periodicity and dedicated to sending the reference signal, a time interval (for example, represented as *N_{offset}*) between a 1^{st} resource (including one or more time domain units) dedicated to sending the reference signal in one periodicity and a start time domain position of the periodicity, or a time interval (for example, represented as *Nᵢₙₜₑᵣᵥₐₗ*) between two adjacent resources (where one of the resources includes one or more time domain units) dedicated to sending the reference signal in one periodicity. The start time domain position of the time domain resource included in the first resource set is, for example, an SFN or a DFN, and a slot index corresponding to the start time domain position is, for example, 0. In addition, the first configuration information may further indicate a frequency domain resource included in the first resource set, for example, indicate a starting frequency domain position and a bandwidth of the frequency domain resource included in the first resource set, or indicate a starting frequency domain position and an end frequency domain position of the frequency domain resource included in the first resource set. This is not limited.

For example, regardless of an implementation in which the first resource set includes a resource unit or an implementation in which the first resource set does not include a resource unit, the first configuration information may be implemented in the manners described in the foregoing two paragraphs. For the implementation in which the first resource set includes the resource unit, the first configuration information may also include further information. Optionally, in the implementation in which the first resource set includes the resource unit, the first configuration information may further include information about an association relationship between positions and indexes of part or all of resource units in the first resource set. A UE that obtains the first configuration information determines an index, and then can determine a time domain position and a frequency domain position of a resource unit corresponding to the index.

S503: The first UE sends first information to the second UE. Correspondingly, the second UE receives the first information from the first UE. The first information is, for example, SCI, or an SL MAC CE, or may be other information.

The first information may indicate the resource selected by the first UE, for example, indicate the first resource. The first information may be sent to the second UE in a unicast manner, or the first information may be sent in a broadcast manner, and the second UE may be a UE that receives the first information; or the first information may be sent in a multicast manner, and the second UE may be a UE that receives the first information in a multicast group.

The first information may indicate the first resource in different manners. The following describes the manners by using examples.
1. Resource units are not obtained through division in the first resource set.

In this case, the first information may indicate a time domain resource position and a frequency domain resource position of the first resource. For example, the first resource includes two sub-resources, such as a first sub-resource and a second sub-resource. The first information may include first indication information and second indication information. The first indication information may indicate a time domain resource position of the first sub-resource, and the second indication information may indicate a time interval between a time domain resource of the first sub-resource and a time domain resource of the second sub-resource. In this embodiment of this application, the first resource set is newly defined, the first resource set is not a resource pool, and the first information may be sent in a sending resource pool of the first UE. However, the first resource set may be in the resource pool, or may not be in the resource pool, or may include part or all of resources in the resource pool. Therefore, the first information cannot indicate a time interval between a time domain position of the first resource and a time domain position of the first information, but needs to indicate an absolute time domain position of the first resource, that is, the first indication information may indicate an absolute time domain position of the first sub-resource.

Optionally, the first information includes a system frame number (system frame number, SFN) field and a time offset field, the first indication information is carried in the SFN field, and the second indication information is carried in the time offset field. The SFN field includes, for example, a direct frame number (direct frame number, DFN) field and a time domain unit index field. The DFN field may indicate an index of a frame in which the time domain resource of the first sub-resource is located, and the time domain unit index field may indicate an index of a time domain unit, in the frame, in which the time domain resource of the first sub-resource is located. For example, the time domain unit is a slot, and the time domain unit index field is, for example, a slot index (slot index) field, where the slot index field may indicate an index of a slot, in the frame, in which the time domain resource of the first sub-resource is located. The DFN field includes, for example, 10 bits (bit), and a length of the time domain unit index field may be related to a subcarrier spacing. For example, the subcarrier spacing is 15 kHz, and the time domain unit index field may include 4 bits; or the subcarrier spacing is 60 kHz, and the time domain unit index field may include 7 bits. For example, if the frame index indicated by the DFN field in the SFN field is 3, the slot index indicated by the time domain unit index field is 7, and the time interval indicated by the time offset field is five slots, the time domain resource of the first sub-resource is located in a 7^{th} slot of a 3^{rd} frame, and the time domain resource of the second sub-resource is located after the five slots of the first sub-resource, that is, a 12^{th} slot of the 3^{rd} frame. Alternatively, the first information may not include an SFN field, but include a DFN field and a time offset field. The DFN field may indicate the time domain position of the first sub-resource, for example, indicate an index of a frame in which the time domain resource of the first sub-resource is located. Optionally, the first information may further include a time domain unit index field, and the time domain unit index field may indicate an index of a time domain unit, in the frame, in which the time domain resource of the first sub-resource is located.

Alternatively, the first resource may include one sub-resource, for example, include a first sub-resource, and the first information may include first indication information but not include second indication information. For an implementation of the first indication information, refer to the foregoing descriptions.

The foregoing describes a manner in which the first information indicates the time domain resource position of the first resource, and the following describes a manner in which the first information indicates the frequency domain resource position of the first resource. For example, the first information may include third indication information, and the third indication information may indicate the frequency domain resource position of the first resource.

In an optional implementation of the third indication information, the third indication information may be carried in an existing field in the first information. In this manner, no new field needs to be added to the first information, and compatibility with a conventional technology is facilitated. For example, information in this format: the first information, is originally used to schedule a PSSCH, and the first information may include a field indicating a frequency domain resource position of the PSSCH. For example, the first information is SCI. A field that is included in the SCI and that indicates the frequency domain resource position of the PSSCH is, for example, a frequency resource assignment (frequency resource assignment) field. The frequency resource assignment field may include a bit indicating a frequency domain resource indicator value (frequency resource indicator value, FRIV). The frequency domain resource position of the PSSCH may be determined based on the FRIV. In this case, in this embodiment of this application, the frequency field assignment field may indicate a frequency domain resource position of the reference signal. For example, the frequency resource assignment field in the first information may carry the third indication information. In this indication manner, a starting frequency domain position of the reference signal may be the same as the starting frequency domain position of the PSSCH. For example, the first information is used to schedule a first PSSCH in addition to the first reference signal. In this case, both a starting frequency domain position of the first reference signal and a starting frequency domain position of the first PSSCH are indicated by the frequency resource assignment field. The frequency resource assignment indication indicates only one frequency domain position, and the frequency domain position is both the starting frequency domain position of the first reference signal and the starting frequency domain position of the first PSSCH.

Optionally, if the third indication information is carried in an existing field in the first information, a manner in which the third indication information indicates the frequency domain resource position of the first resource is that the third indication information may indicate the starting frequency domain position of the frequency domain resource of the first resource. A quantity of frequency domain units included in a frequency domain resource (or a frequency domain sub-resource) used to send the reference signal is, for example, represented as ${N}_{subchannel}^{RS}$, and ${N}_{subchannel}^{RS}$ may be configured by the network device or a UE, or predefined in the protocol. For example, the quantity may be included in configuration information used to configure the first resource set. Therefore, the first information indicates the starting frequency domain position of the frequency domain resource of the first resource.

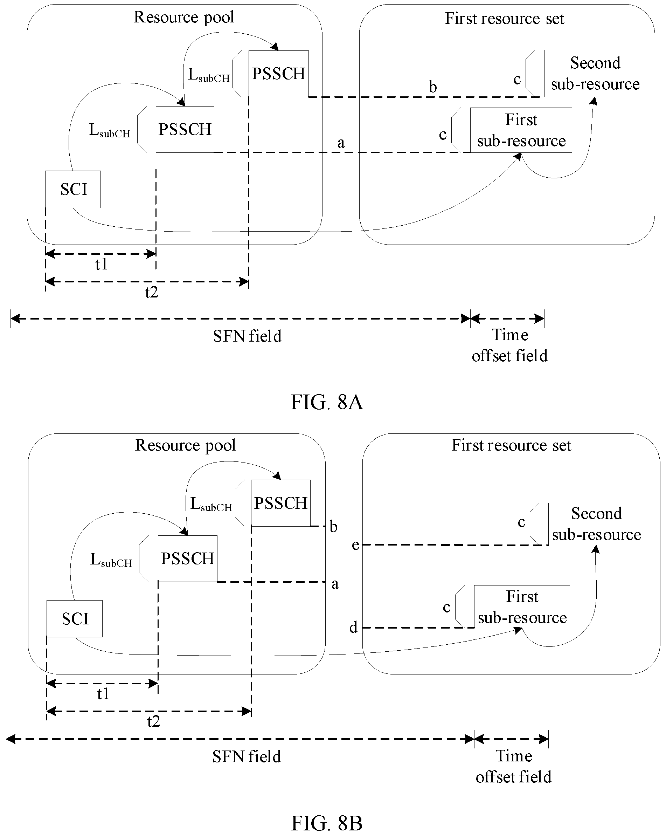

An example in which the first information is used to schedule the first reference signal and the first PSSCH is used. FIG. 8A shows an example of frequency domain resource positions of the first PSSCH and the first reference signal. In FIG. 8A, an example in which the first resource includes the first sub-resource and the second sub-resource is used, an example in which a resource used to transmit the first PSSCH includes two resources is also used, and in addition, an example in which the first information is included in SCI is used. For example, based on an indication of a time domain resource assignment (time resource assignment) field in the first information, the first information is used to reserve a resource after t1 and a resource after t2 for sending the first PSSCH. In addition, an index ${n}_{subCH , i}^{start}$ of a starting subchannel on which a frequency domain resource of the first PSSCH is located and a quantity L_{subCH} of subchannels may be determined based on an indication of a frequency resource assignment field. Therefore, a second time of PSSCH transmission is performed on L_{subCH} contiguous channels on an ${\left({n}_{subCH , 1}^{start}\right)}^{th}$ (represented as a in FIG. 8A) subchannel after t1 slots, and a third time of PSSCH transmission is performed on L_{subCH} contiguous channels on an ${\left({n}_{subCH , 2}^{start}\right)}^{th}$ (represented as b in FIG. 8A) subchannel after t2 slots. For example, based on indications of the first indication information and the second indication information, the time domain resource of the first sub-resource is located in the 7^{th} slot of the 3^{rd} frame, and the time domain resource of the second sub-resource is located after the five slots of the first sub-resource, that is, the 12^{th} slot of the 3^{rd} frame. It can be learned with reference to the frequency resource assignment field that the time domain resource of the first sub-resource is located in the 7^{th} slot of the 3^{rd} frame and is located on ${N}_{subchannel}^{RS}$ (represented as c in FIG. 8A) contiguous channels on an ${\left({n}_{subCH , 1}^{start}\right)}^{th}$ subchannel, and the time domain resource of the second sub-resource is located in the 12^{th} slot of the 3^{rd} frame and is located on ${N}_{subchannel}^{RS}$ contiguous channels on an ${\left({n}_{subCH , 2}^{start}\right)}^{th}$ subchannel. It can be learned that the starting frequency domain position of the first reference signal is the same as the starting frequency domain position of the first PSSCH.

In another optional implementation of the third indication information, the third indication information may be carried in a newly added field in the first information. In this manner, a field indicating a frequency domain resource of a PSSCH does not need to indicate a frequency domain resource of a reference signal, so that the reference signal can be better decoupled from the PSSCH, and transmission of the reference signal is more flexible. For example, the newly added field is referred to as a starting subchannel assignment (starting subchannel assignment) field, or the newly added field may have another name. This is not limited. For example, the newly added field may meet the following relationship:

In the formula 2, starting subchannel assignment represents a value of the newly added field, ${n}_{subCH , 1}^{start , RS}$ represents a starting frequency domain position of the frequency domain resource of the first sub-resource, ${n}_{subCH , 2}^{start , RS}$ represents a starting frequency domain position of the frequency domain resource of the second sub-resource, and ${N}_{subchannel}^{RS}$ may represent a total quantity of frequency domain units included in the sub-resource of the first resource. For example, different sub-resources included in the first resource include a same quantity of frequency domain units. In this case, ${N}_{subchannel}^{RS}$ may represent a total quantity of frequency domain units included in any sub-resource in the first resource.

Optionally, if the third indication information is carried in the newly added field in the first information, a manner in which the third indication information indicates the frequency domain resource position of the first resource is as follows: The third indication information may indicate, for example, the starting frequency domain position of the frequency domain resource of the first resource, and indicate a quantity of frequency domain units occupied by the frequency domain resource of the first resource or a quantity of frequency domain units occupied by a frequency domain sub-resource included in the first resource. The quantity of frequency domain units occupied by the frequency domain resource of the first resource or the quantity of frequency domain units occupied by the frequency domain sub-resource included in the first resource is, for example, represented as ${N}_{subchannel}^{RS}$. Optionally, ${N}_{subchannel}^{RS}$ may be configured by the network device or a UE, or predefined in the protocol. For example, the quantity may be included in configuration information used to configure the first resource set. Alternatively, ${N}_{subchannel}^{RS}$ may be autonomously determined by the first UE. For example, quantities of frequency domain units included in resources that are scheduled by the first UE and used to transmit different reference signals may be the same or different, or quantities of frequency domain units included in resources that are scheduled by different UEs and used to transmit reference signals may be the same or different. In this case, resource scheduling may be more flexible.

An example in which the first information is used to schedule the first reference signal and the first PSSCH is used. FIG. 8B shows an example of frequency domain resource positions of the first PSSCH and the first reference signal. In FIG. 8B, an example in which the first resource includes the first sub-resource and the second sub-resource is used, an example in which a resource used to transmit the first PSSCH includes two resources is also used, and in addition, an example in which the first information is included in SCI is used. For example, based on an indication of a time domain resource assignment (time resource assignment) field in the first information, the first information is used to reserve a resource after t1 and a resource after t2 for sending the first PSSCH. In addition, an index ${n}_{subCH , i}^{start}$ of a starting subchannel on which a frequency domain resource of the first PSSCH is located and a quantity L_{subCH} of subchannels may be determined based on an indication of a frequency resource assignment field in the first information. Therefore, a second time of PSSCH transmission is performed on L_{subCH} contiguous channels on an ${\left({n}_{subCH , 1}^{start}\right)}^{th}$ (represented as a in FIG. 8A) subchannel after t1 slots, and a third time of PSSCH transmission is performed on L_{subCH} contiguous channels on an ${\left({n}_{subCH , 2}^{start}\right)}^{th}$ (represented as b in FIG. 8A) subchannel after t2 slots. For example, based on indications of the first indication information and the second indication information, or based on indications of the SFN field and the time offset field, the time domain resource of the first sub-resource is located in the 7^{th} slot of the 3^{rd} frame, and the time domain resource of the second sub-resource is located after the five slots of the first sub-resource, that is, the 12^{th} slot of the 3^{rd} frame. With reference to the newly added field in the first information, the time domain resource of the first sub-resource is located in the 7^{th} slot of the 3^{rd} frame and is located on ${N}_{subchannel}^{RS}$ (represented as c in FIG. 8A) contiguous channels on an ${\left({n}_{subCH , 1}^{start , RS}\right)}^{th}$ (represented as d in FIG. 8A) subchannel, and the time domain resource of the second sub-resource is located in the 12^{th} slot of the 3^{rd} frame and is located on ${N}_{subchannel}^{RS}$ contiguous channels on an ${\left({n}_{subCH , 2}^{start , RS}\right)}^{th}$ (represented as e in FIG. 8A) subchannel. In an indication manner of the newly added field, the starting frequency domain position of the reference signal may be the same as or different from the starting frequency domain position of the PSSCH. In FIG. 8B, an example in which the starting frequency domain position of the first reference signal is different from the starting frequency domain position of the first PSSCH is used.

In FIG. 8A and FIG. 8B, all resources used to send the SCI and the first PSSCH are in a resource pool. The resource pool is, for example, a resource pool configured for the first UE, for example, a first resource pool. The first resource is in the first resource set. For example, the first resource set has no intersection with the first resource pool.

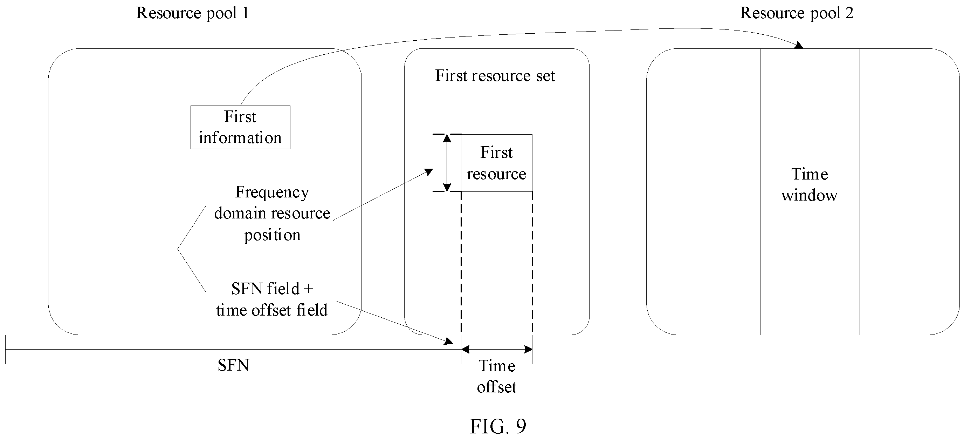

FIG. 9 shows an example in which the first information indicates the time domain resource position and the frequency domain resource position of the first resource. For example, the first information indicates the time domain resource position of the first sub-resource by using the SFN field and the time offset field, and indicates the start frequency domain resource position of the first resource by using the frequency resource assignment field or the newly added field. As shown in FIG. 9, a receive side (for example, the second UE) of the first information may determine the first resource based on the SFN field and the time offset field, and based on the frequency resource assignment field or the newly added field. In FIG. 9, an example in which the first resource set is outside the resource pool is used.

2. Resource units are obtained through division in the first resource set.

In this manner, the first information may indicate an index of a resource unit to which the first resource belongs, and does not need to indicate a specific position of the resource unit. The indication manner is simple, and helps reduce indication overheads.

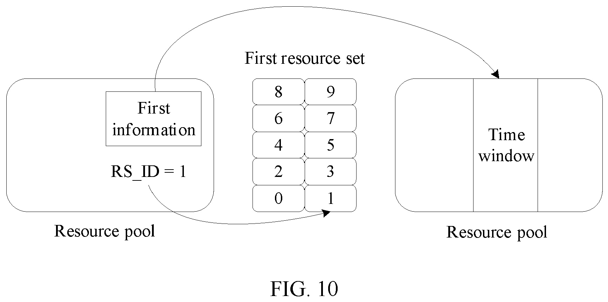

For example, although the resource unit is set, the UE does not select a resource unit based on an identifier. For example, the first resource is not determined based on a first identifier, but is determined based on step 1 to step 5 in the resource selection procedure described in S501. In this case, the first information may indicate the index of the resource unit to which the first resource belongs, so that a receive side of the first information can determine the resource unit selected by the first UE. Optionally, a new field may be added to the first information, and the newly added field may indicate the index of the resource unit to which the first resource belongs. For example, with reference to FIG. 10, the newly added field is, for example, represented as an RS_ID, and an index indicated by the RS_ID is, for example, 1. In this case, the second UE may determine that the first UE is to send the reference signal by using a resource unit 1.

Alternatively, when the resource unit is set, if the UE selects a resource unit based on an identifier, for example, the first resource is determined based on a first identifier, the first information may indicate the index of the resource unit to which the first resource belongs. For example, a new field may be added to the first information to indicate the index of the resource unit to which the first resource belongs. Alternatively, the first information may not need to indicate the index of the resource unit to which the first resource belongs. Because the first information includes the first identifier, a receive side of the first information can determine, based on the first identifier, the index of the resource unit to which the first resource belongs. In other words, in this case, the first information may not need to indicate the first resource or indicate a position of the first resource by using a dedicated field. The receive side of the first information can determine, based on the first identifier, the resource unit to be used by the first UE, so that overheads of the first information can be reduced. Alternatively, if the UE selects the resource unit based on the identifier, it may also be considered that the first identifier included in the first information indicates the index of the resource unit, that is, the first information still indicates the index of the resource unit, but no new field is added.

Alternatively, when the resource unit is set, if the UE selects the resource unit based on the identifier, it can be learned from the foregoing descriptions that a resource conflict may occur. It can be learned from the foregoing descriptions that if the resource determined by the first UE based on the first identifier conflicts with a resource reserved by another UE, the first UE may reselect a resource based on step 5 in the resource selection procedure in S501. For example, the first UE reselects the first resource, and the first resource is different from the resource directly determined by the first UE based on the first identifier. In this case, the first information may indicate the index of the resource unit to which the first resource belongs. For example, the first information includes the first identifier, and the first information may further include fourth indication information and/or fifth indication information. The fourth indication information may indicate a time domain offset, and the fifth indication information may indicate a frequency domain offset. This is equivalent to saying that the first information may indicate, by using the first identifier and the fourth indication information and/or the fifth indication information, the index of the resource unit to which the first resource belongs. For example, the fourth indication information may be carried in a time domain offset (time offset) field in the first information, or the field may have another name, for example, the field is a newly added field in the first information. The fifth indication information may be carried in a frequency domain offset (frequency offset) field in the first information, or the field may have another name, for example, the field is a newly added field in the first information. The time domain offset indicated by the fourth indication information may be an offset of the first resource in the time domain relative to the resource unit corresponding to the first identifier (that is, the resource unit directly determined based on the first identifier, for example, the resource unit determined according to the formula 1), and the frequency domain offset indicated by the fifth indication information may be an offset of the first resource in the frequency domain relative to the resource unit corresponding to the first identifier. For example, if the first UE receives second SCI, and the first UE determines that an index of a resource unit indicated by the second SCI is the same as an index of a resource unit corresponding to the identifier, a resource conflict occurs. In this case, the first UE reselects a resource used to send the first reference signal. For example, the first UE reselects the first resource. The first resource may have a time domain offset with the resource corresponding to the first identifier, and/or the first resource may have a frequency domain offset with the resource corresponding to the first identifier. In conclusion, the first resource and the resource corresponding to the first identifier are different resources. The first information can indicate the first resource by indicating the first identifier and by using the fourth indication information and/or the fifth indication information. The receive side (for example, the second UE) of the first information can determine the first resource based on the first identifier in the first information and based on the fourth indication information and/or the fifth indication information.

A time domain offset field used to carry the fourth indication information and the foregoing time offset field indicating the time interval between the first sub-resource and the second sub-resource are different fields. If differentiation is required, the time offset field may be referred to as a first time offset field or a first time domain offset field, and a time domain offset field used to carry the fourth indication information is referred to as a second time offset field or a second time domain offset field.

Optionally, the fourth indication information may include information indicating that the time domain offset is before or after the first resource in time domain, so that the receive side of the first information can determine that the first resource is before or after the resource unit corresponding to the first identifier in time. For example, a length of the time domain offset field is *Lₜᵢₘₑ* bits (for example, *Lₜᵢₘₑ* = l*og*₂*T* + 1), and a most significant bit or a least significant bit in the time domain offset field indicates that the time domain offset is before or after the resource unit corresponding to the first identifier. For example, a value of the most significant bit or the least significant bit is "0", to indicate that the first resource is after the resource unit corresponding to the first identifier; or a value of the most significant bit or the least significant bit is "1", to indicate that the first resource is before the resource unit corresponding to the first identifier. A bit other than the most significant bit or the least significant bit in the time domain offset field may indicate the time domain offset.

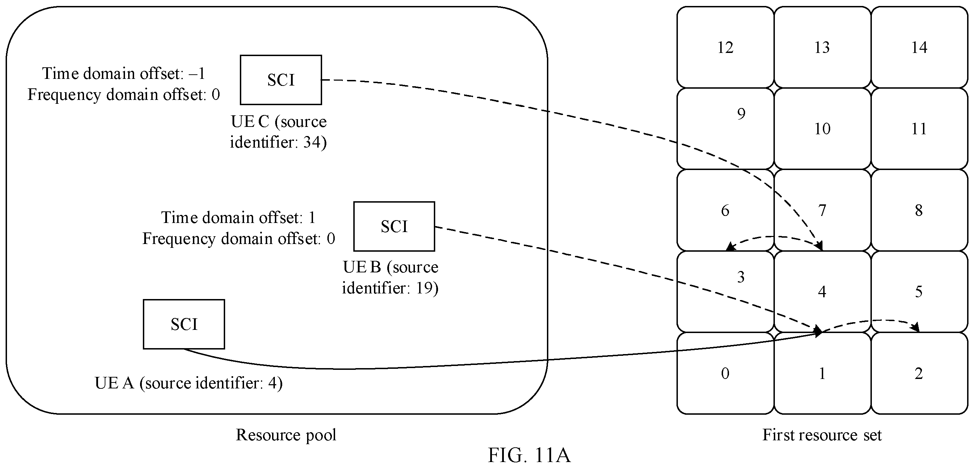

For example, FIG. 11A is a diagram of a resource conflict resolution manner. A resource unit determined by a UE A based on a source ID (for example, the source ID is 4) of the UE A is a resource unit 4, and SCI sent by the UE A includes the source ID of the UE A. Resource units determined based on an identifier of a UE B (for example, the source ID is 19) and an identifier of a UE C (for example, source ID = 34) are both the resource unit 4. As a result, after receiving the SCI, both the UE B and the UE C may determine that a resource conflict occurs. Therefore, the UE B may reselect a resource. For example, the UE B selects a resource unit 5, and SCI sent by the UE B may include a time domain offset field. The time domain offset field includes fourth indication information. A value of a most significant bit or a least significant bit in the fourth indication information is "0", that is, it indicates that the resource unit selected by the UE B is after the resource unit 4. In addition, a value of another bit in the fourth indication information indicates that the time domain offset is 1. A receive side of the SCI may determine that the UE B selects the resource unit 5. In addition, the UE C may also reselect a resource. For example, the UE C selects a resource unit 3, and SCI sent by the UE C may include a time domain offset field. The time domain offset field includes fourth indication information. A value of a most significant bit or a least significant bit in the fourth indication information is "1", that is, it indicates that the resource unit selected by the UE C is before the resource unit 4. In addition, a value of another bit in the fourth indication information indicates that the time domain offset is 1. In this case, a receive side of the SCI may determine that the UE B selects the resource unit 3. For example, neither the SCI sent by the UE B nor the SCI sent by the UE C includes a frequency domain offset field (or fifth indication information), or each of the SCI sent by the UE B and the SCI sent by the UE C includes a frequency domain offset field (or fifth indication information), and frequency domain offsets indicated by the two frequency domain offset fields (fifth indication information) are 0. Each piece of SCI is sent in a resource pool (in FIG. 11A, an example in which a same resource pool is configured for the UE 1, the UE 2, and the UE 3). The resource unit is in the first resource set. For example, the first resource set has no intersection with the resource pool.

Optionally, the fifth indication information may include information indicating that the frequency domain offset is located in a first direction or a second direction of the first resource in frequency domain, so that the receive side of the first information can determine a specific direction that is of the resource unit corresponding to the first identifier and in which the first resource is located in frequency domain. In this case, the first resource set includes T * F resource units, F represents a quantity of frequency domain units included in the resource units in the first resource set, and a value of F is, for example, 0, 1, 2, 3, ..., or 1, 2, 3, 4, .... For example, the first direction is a direction in which the value of F is in descending order (or a direction in which the value of F is decreased), and the second direction is a direction in which the value of F is in ascending order (or a direction in which the value of F is increased); or the first direction is a direction in which the value of F is in ascending order, and the second direction is a direction in which the value of F is in descending order. This is equivalent to saying that in this embodiment of this application, frequency magnitude may not need to be considered (for example, for different resource units, the UE may fail to identify whether a frequency of a resource unit is higher or lower than a frequency of another resource unit), but a position of a resource unit can be indicated by indicating a change direction of F. For example, a most significant bit or a least significant bit in the frequency domain offset field indicates that the frequency domain offset is located in the first direction or the second direction of the resource unit corresponding to the first identifier. For example, a value of the most significant bit or the least significant bit is "0", to indicate that the first resource is located in the first direction of the resource unit corresponding to the first identifier; or a value of the most significant bit or the least significant bit is "1", to indicate that the first resource is located in the second direction of the resource unit corresponding to the first identifier. A bit other than the most significant bit or the least significant bit in the frequency domain offset field may indicate the frequency domain offset.

In addition, because a frequency domain range of the first resource set is limited, a case may occur: After a UE (for example, the second UE) receives information (for example, the first information) from another UE (for example, the first UE), the resource unit corresponding to the index of the resource unit determined based on the first identifier and based on the fourth indication information and/or the fifth indication information included in the first information exceeds a range of the first resource set. The first resource set shown in FIG. 6A or FIG. 6B is used as an example. For example, the second UE receives the SCI from the first UE. If the second UE determines the index of the resource unit based on the first identifier and based on the fourth indication information and/or the fifth indication information included in the first information, the determined index is 10, and a resource unit 10 is not in the first resource set. In this case, the second UE may recalculate the frequency domain offset starting from an end point in the first direction or an end point in the second direction in the first resource set, to determine the index of the resource unit. For example, if the second UE offsets toward the first direction of the resource unit corresponding to the first identifier, the second UE may recalculate an offset from the end point in the second direction of the first resource set. For example, if the first direction is a high-frequency direction and the second direction is a low-frequency direction, the second UE first offsets toward the high-frequency direction. When a highest frequency in the first resource set arrives, the second UE recalculates an offset starting from a lowest frequency in the first resource set. Alternatively, if the second UE offsets toward the second direction of the resource unit corresponding to the first identifier, the second UE may recalculate an offset starting from the end point in the first direction of the first resource set. For example, if the first direction is a high-frequency direction and the second direction is a low-frequency direction, the second UE first offsets toward the low-frequency direction. When a lowest frequency in the first resource set arrives, the second UE recalculates an offset starting from a highest frequency in the first resource set. This manner of determining the index of the resource unit may be understood as that the receiving UE determines the index of the resource unit in the first resource set in a cyclic manner based on the frequency domain offset. For example, in FIG. 6A, the index of the resource unit (that is, the resource unit corresponding to the first identifier) directly determined by the second UE based on the first identifier is 4, the frequency domain offset indicated by the fifth indication information is 4, and the second UE offsets toward the first direction by 3 starting from a frequency domain position of a resource unit 4. For example, the first direction is a high-frequency direction and the second direction is a low-frequency direction. In this case, the second UE reaches an upper frequency limit of the first resource set, and then performs a frequency domain offset 1 starting from a lowest frequency in the first resource set; and may determine a resource unit 0 and a resource unit 1. With reference to other information (for example, the fourth indication information), it may be determined that a final resource unit is the resource unit 0 or the resource unit 1.

Optionally, if the first UE determines the resource unit in the cyclic manner, the fifth indication information may not include the information indicating that the frequency domain offset is located in the first direction or the second direction of the first resource in frequency domain. For example, for the second UE, if the fifth indication information includes the information indicating that the frequency domain offset is located in the first direction or the second direction of the first resource in frequency domain, it indicates that the second UE directly determines the index of the resource unit based on the first identifier and based on the fourth indication information and/or the fifth indication information included in the first information. If the fifth indication information does not include the information indicating that the frequency domain offset is located in the first direction or the second direction of the first resource in frequency domain, it indicates that the second UE may determine the index of the resource unit in the cyclic manner.

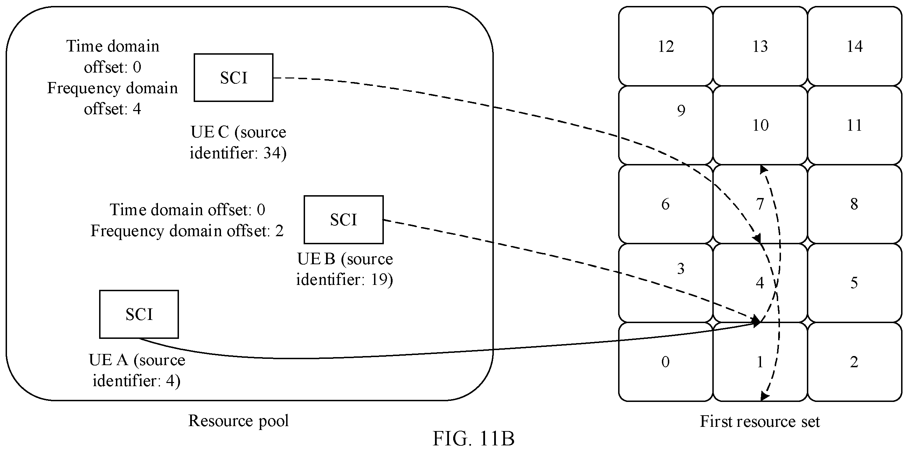

For example, FIG. 11B is a diagram of another resource conflict resolution manner. A resource unit determined by a UE A based on a source ID of the UE A is a resource unit 4, and SCI sent by the UE A includes the source ID of the UE A. Resource units determined based on an identifier of a UE B (for example, the source ID is 19) and an identifier of a UE C (for example, source ID = 34) are both the resource unit 4. As a result, after receiving the SCI, both the UE B and the UE C may determine that a resource conflict occurs. In this case, the UE B may reselect a resource. For example, the UE B selects a resource unit 10, and SCI sent by the UE B may include a frequency domain offset field. The frequency domain offset field includes fifth indication information. A value of a most significant bit or a least significant bit in the fifth indication information is "1", that is, it indicates that the resource unit selected by the UE C is located in a second direction of the resource unit 4, and the second direction is, for example, a direction in which a value of F is increased. In addition, a value of another bit in the fifth indication information indicates that the frequency domain offset is 2. In this case, a receive side of the SCI may determine that the UE B selects the resource unit 10. In addition, the UE C may also reselect a resource. For example, SCI sent by the UE C may include a frequency domain offset field, the frequency domain offset field includes fifth indication information, and the fifth indication information may not indicate whether the resource unit selected by the UE C is located in a first direction or the second direction of the resource unit 4. For example, the fifth indication information indicates that the frequency domain offset is 4. For example, the first resource set is shown in FIG. 6A or FIG. 6B. It can be learned that if offsetting by four resource units based on the resource unit 4 in the direction in which the value of F is increased exceeds a range of the first resource set. Therefore, when the range of the first resource set is exceeded, the frequency domain offset may be recalculated starting from a frequency domain unit corresponding to smallest F in the first resource set. In this case, a receive side of the SCI may determine that the UE C selects the resource unit 1. Each piece of SCI is sent in a resource pool (in FIG. 11A, an example in which a same resource pool is configured for the UE 1, the UE 2, and the UE 3). The resource unit is in the first resource set. For example, the first resource set has no intersection with the resource pool.

Optionally, if the first information does not indicate the time domain offset, the first information may not include the fourth indication information, and the receive side of the first information does not need to determine, based on the fourth indication information, the resource selected by the first UE. Alternatively, even if the first information does not indicate the time domain offset, the first information may also include the fourth indication information. In this case, a value of the fourth indication information may be a default (default) value. The receive side of the first information may determine, based on the default value, that the fourth indication information is an invalid value, or determine that the first information does not indicate the time domain offset. A relationship between the frequency domain offset and the fifth indication information is similar.

Optionally, whether the UE selects a resource from the first resource set based on the identifier or does not select a resource from the first resource set based on the identifier may be indicated by the network device or a UE, or preconfigured in the UE, or predefined in the protocol. For example, an indication manner of the network device is as follows: The first information may include sixth indication information. When the sixth indication information is a first value, it may indicate that the index of the resource unit is determined based on the identifier, or indicate to determine the index of the resource unit based on the identifier, or indicate that the index of the resource unit to which the first resource belongs is determined based on the first identifier. When the sixth indication information is a second value or is not a first value, it may indicate that the index of the resource unit is not determined based on the identifier, or indicate not to determine the index of the resource unit based on the identifier, or indicate that the index of the resource unit to which the first resource belongs is not determined based on the first identifier.

Alternatively, when the first information includes the sixth indication information, it may indicate that the index of the resource unit is determined based on the identifier, or indicate to determine the index of the resource unit based on the identifier, or indicate that the index of the resource unit to which the first resource belongs is determined based on the first identifier. When the first information does not include the sixth indication information, it may indicate that the index of the resource unit is not determined based on the identifier, or indicate not to determine the index of the resource unit based on the identifier, or indicate that the index of the resource unit to which the first resource belongs is not determined based on the first identifier.

Alternatively, the sixth indication information may not be included in the first information, but may be included in other information. This is not limited.

Regardless of the foregoing indication manner used by the first information to indicate the first resource, optionally, the first information may further indicate a time window used to send a beam measurement result, and the beam measurement result may be obtained by the receive side (for example, the second UE) of the first information by measuring the first reference signal. For example, the first reference signal may be used for beam management, or is used by a receive side (for example, the second UE) of the first reference signal to determine a communication beam between the first UE and the second UE based on the first reference signal. In this case, after receiving the first reference signal, the second UE may measure the first reference signal, to obtain a beam measurement result. The second UE may send the beam measurement result to the first UE. In this case, the first information may indicate a time window used to send the beam measurement result, so that the first UE can receive the beam measurement result within the time window, and the second UE can also send the beam measurement result within the time window. This improves a success rate of sending the beam measurement result, and the first UE does not need to continuously detect the beam measurement result, to reduce power consumption of the first UE. The time window may be in the time domain resource included in the first resource set, or the time window may be outside the first resource set. The time window may be in one or more resource pools in the first BWP (for example, in the first resource pool of the first UE and/or in a resource pool of another UE), or may be outside all resource pools included in the first BWP. For example, FIG. 6A, FIG. 6B, FIG. 9, FIG. 10, and other accompanying drawings all show the time window. In these accompanying drawings, an example in which the time window is in a resource pool is used.

For example, the first information may indicate the time window by using a newly added field, and the newly added field includes, for example, a measurement window (measurement window) field and a window duration (window duration) field. The measurement window may indicate a start time domain position of the time window. For example, an indication manner of the measurement window is similar to that of the foregoing SFN field, and details are not described again. The window duration may indicate duration of the time window.

Regardless of the foregoing indication manner used by the first information to indicate the first resource, optionally, the first information may further indicate a format of a time domain unit included in the first resource. The first resource may include one or more time domain units, and formats of different time domain units may be the same or different. If formats of different time domain units are the same, the first information indicates a format of any one of the time domain units. If formats of different time domain units are different, the first information indicates a format of each of the time domain units. A format of a time domain unit may indicate specific time domain sub-units used to send a reference signal in the time domain unit. For example, a format of a time domain unit indicates a function of each time domain sub-unit within the time domain unit. Optionally, all time domain sub-units in a time domain unit are used to send a reference signal. Alternatively, in addition to a time domain sub-unit used to send a reference signal, a time domain unit further includes a time domain sub-unit used as a gap (GAP). For example, the first reference signal includes one or more reference signals, and one time domain unit included in the first resource may be used to send at least one of the one or more reference signals. In the at least one reference signal, different reference signals may correspond to a same beam direction or different beam directions. If different reference signals correspond to different beam directions, the time domain unit may include a time domain sub-unit used to send a reference signal. In addition, a time domain sub-unit used as a GAP may be further included between time domain sub-units used to send reference signals corresponding to two different beam directions, so that the UE switches a beam direction.

Optionally, the first resource may be a periodic resource. For example, the first information may further indicate a periodicity of the first resource.

S504: The first UE sends the first reference signal on the first resource. Correspondingly, the second UE receives the first reference signal on the first resource.

If the first reference signal is a unicast signal, the second UE may receive the first reference signal; or if the first reference signal is a broadcast signal or a multicast signal, the second UE is one of UEs that receive the first reference signal, and in addition to the second UE, another UE may receive the first reference signal.

For example, the first reference signal is used for beam management, or is used by the second UE to determine a communication beam between the first UE and the first UE, or may be used for another purpose. For example, the first reference signal is used for beam management or used to determine a communication beam between the first UE and the first UE. In this case, after receiving the first reference signal, the second UE may measure the first reference signal, to obtain a beam measurement result. The beam measurement result is, for example, represented as an RSRP, or represented as another parameter. If the first reference signal is used for beam sweeping, the beam measurement result may also be referred to as a beam sweeping result or the like. A name is not limited.

Optionally, the method may further include S505: The second UE sends the beam measurement result to the first UE. Correspondingly, the first UE receives the beam measurement result. For example, the first information further indicates a time window used to send the beam measurement result. In this case, the second UE may send the beam measurement result to the first UE within the time window, and the first UE may also receive the beam measurement result within the time window. This is used as an example in S505 in FIG. 5.

In conclusion, this embodiment of this application provides a resource set used to send a reference signal. A resource in the resource set may be used to send a reference signal. It may be understood as that the resource in the resource set may be used to send a reference signal but not to send data (for example, a PSSCH). As a result, the data and the reference signal may be sent on separate resources, thereby reducing impact of the reference signal on data receiving quality. For example, in a time domain unit in which the PSSCH is located, AGC may still be implemented by using a 1^{st} symbol. Because the time domain unit does not include a reference signal, a transmit power in the time domain unit remains approximately unchanged, and an overall receive power of the slot can be covered through the AGC of the 1^{st} symbol. Therefore, quality of receiving the PSSCH by a receive side can be improved.

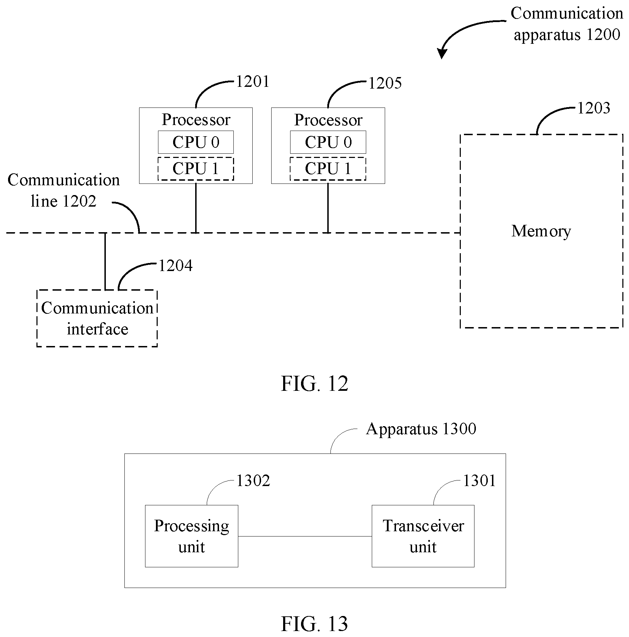

FIG. 12 is a diagram of a structure of a communication apparatus according to an embodiment of this application. The communication apparatus 1200 may be the first UE in the embodiment shown in FIG. 5 or a circuit system of the first UE, and is configured to implement the method corresponding to the first UE in the foregoing method embodiment. Alternatively, the communication apparatus 1200 may be the second UE shown in FIG. 5 or a circuit system of the second UE, and is configured to implement the method corresponding to the second UE in the foregoing method embodiment. For example, a circuit system is a chip system.

The communication apparatus 1200 includes at least one processor 1201. The processor 1201 may be configured for internal processing of the apparatus to implement a specific control processing function. Optionally, the processor 1201 includes instructions. Optionally, the processor 1201 may store data. Optionally, different processors may be independent components, may be at different physical positions, or may be located on different integrated circuits. Optionally, different processors may be integrated into one or more processors, for example, integrated into one or more integrated circuits.

Optionally, the communication apparatus 1200 includes one or more memories 1203, configured to store instructions. Optionally, the memory 1203 may further store data. The processor and the memory may be separately disposed, or may be integrated together.

Optionally, the communication apparatus 1200 includes a communication line 1202 and at least one communication interface 1204. Because the memory 1203, the communication line 1202, and the communication interface 1204 are all optional, the memory 1203, the communication line 1202, and the communication interface 1204 are all represented by dashed lines in FIG. 12.

Optionally, the communication apparatus 1200 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement receiving and sending functions of the communication apparatus 1200 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 1201 may include a general-purpose central processing unit (central processing unit, CPU), a microprocessor, an application-specific integrated circuit (application-specific integrated circuit, ASIC), or one or more integrated circuits configured to control program execution of solutions of this application.

The communication line 1202 may include a path for transmitting information between the foregoing components.

The communication interface 1204 is any apparatus like a transceiver, and is configured to communicate with another device or a communication network, such as the Ethernet, a radio access network (radio access network, RAN), a wireless local area network (wireless local area network, WLAN), or a wired access network.

The memory 1203 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium capable of carrying or storing expected program code in a form of instructions or data structures and capable of being accessed by a computer, but is not limited thereto. The memory 1203 may exist independently, and is connected to the processor 1201 through the communication line 1202. Alternatively, the memory 1203 may be integrated with the processor 1201.

The memory 1203 is configured to store computer-executable instructions for executing the solutions in this application, and the processor 1201 controls the execution. The processor 1201 is configured to execute the computer-executable instructions stored in the memory 1203, to implement the steps performed by the first UE or the second UE in the embodiment shown in FIG. 5.

Optionally, the computer-executable instructions in this embodiment of this application may also be referred to as application program code. This is not specifically limited in this embodiment of this application.

During specific implementation, in an embodiment, the processor 1201 may include one or more CPUs, for example, a CPU 0 and a CPU 1 in FIG. 12.

During specific implementation, in an embodiment, the communication apparatus 1200 may include multiple processors such as the processor 1201 and a processor 1205 in FIG. 12. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 12 is a chip, for example, a chip in the first UE or a chip in the second UE, the chip includes the processor 1201 (which may further include the processor 1205), the communication line 1202, and the communication interface 1204. Optionally, the chip may include the memory 1203. Specifically, the communication interface 1204 may be an input interface, a pin, a circuit, or the like. The memory 1203 may be a register, a cache, or the like. The processor 1201 and the processor 1205 each may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation. For example, when each functional module is obtained through division based on each corresponding function, FIG. 13 is a diagram of an apparatus. The apparatus 1300 may be the first UE or the second UE in the foregoing method embodiments, or a chip in the first UE or a chip in the second UE. The apparatus 1300 includes a processing unit 1302 and a transceiver unit 1301.

It should be understood that the apparatus 1300 may be configured to implement the steps performed by the first UE or the second UE in the communication method in embodiments of this application. For related features, refer to the foregoing embodiment shown in FIG. 5. Details are not described herein again.

Optionally, functions/implementation processes of the transceiver unit 1301 and the processing unit 1302 in FIG. 13 may be implemented by the processor 1201 in FIG. 12 by invoking the computer-executable instructions stored in the memory 1203. Alternatively, functions/implementation processes of the processing unit 1302 in FIG. 13 may be implemented by the processor 1201 in FIG. 12 by invoking the computer-executable instructions stored in the memory 1203, and functions/implementation processes of the transceiver unit 1301 in FIG. 13 may be implemented by the communication interface 1204 in FIG. 12.

Optionally, when the apparatus 1300 is a chip or a circuit, functions/implementation processes of the transceiver unit 1301 may alternatively be implemented through a pin, a circuit, or the like. Optionally, the transceiver unit 1301 may include a sending unit and/or a receiving unit. The sending unit is configured to implement a sending function, and the receiving unit is configured to implement a receiving function. Alternatively, the transceiver unit 1301 may be an entire module that can implement a sending function and/or a receiving function. Optionally, the transceiver unit 1301 may be implemented by a transceiver.

This application further provides a computer-readable storage medium. The computer-readable storage medium stores a computer program or instructions. When the computer program or the instructions are run, the method performed by the first UE or the second UE in the foregoing method embodiments is implemented. In this way, the functions in the foregoing embodiments may be implemented in a form of a software functional unit and sold or used as an independent product. Based on such an understanding, the technical solutions in this application essentially, or the part that makes a contribution, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first UE or the second UE in any one of the foregoing method embodiments.

An embodiment of this application further provides a processing apparatus, including a processor and an interface. The processor is configured to perform the method performed by the first UE or the second UE in any one of the foregoing method embodiments.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Various illustrative logical units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor, so that the processor may read information from the storage medium and write information to the storage medium. Optionally, the storage medium may be integrated into a processor. The processor and the storage medium may be disposed in an ASIC, and the ASIC may be disposed in a terminal device. Optionally, the processor and the storage medium may be disposed in different parts of a terminal device.

The computer program instructions can alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Mutual reference may be made to content in embodiments of this application. Unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, in embodiments of this application, the first UE and/or the second UE may perform part or all of the steps in embodiments of this application. The steps or operations are merely examples. In embodiments of this application, other operations or variations of various operations may be further performed. In addition, the steps may be performed in a sequence different from a sequence presented in embodiments of this application, and not all operations in embodiments of this application need to be performed.

## Claims

1. A communication method, applied to a first terminal device, wherein the method comprises:
determining a first resource within a resource selection window in a first resource set, wherein the first resource is used to send a first sidelink reference signal, and the first resource set is a dedicated resource set for a sidelink reference signal;
sending first information to a second terminal device, wherein the first information indicates the first resource; and
sending the first sidelink reference signal on the first resource.

2. The method according to claim 1, wherein the first sidelink reference signal is used by the second terminal device to determine a communication beam between the first terminal device and the second terminal device.

3. The method according to claim 1 or 2, wherein
the first resource comprises a first sub-resource and a second sub-resource, the first information comprises first indication information and second indication information, the first indication information indicates a time domain resource position of the first sub-resource, and the second indication information indicates a time interval between a time domain resource of the first sub-resource and a time domain resource of the second sub-resource.

4. The method according to claim 3, wherein
the first indication information is carried in a system frame number SFN or a direct frame number DFN, and the SFN or the DFN indicates the time domain position of the first sub-resource; and
the second indication information is carried in a time offset field, and the time offset field indicates the time interval between the time domain resource of the first sub-resource and the time domain resource of the second sub-resource.

5. The method according to any one of claims 1 to 4, wherein
the first resource is a periodic resource, and the first information further indicates a periodicity of the first resource.

6. The method according to any one of claims 1 to 5, wherein the first information comprises third indication information, and the third indication information indicates a starting frequency domain position of a frequency domain resource of the first resource.

7. The method according to claim 6, wherein the third indication information further indicates a quantity of frequency domain units occupied by the first resource.

8. The method according to claim 6 or 7, wherein
the first information is contained in first sidelink control information SCI or a first medium access control MAC control element CE.

9. The method according to claim 1 or 2, wherein the first information indicates an index of a resource unit to which the first resource belongs, the first resource set comprises a plurality of resource units, and each of the plurality of resource units corresponds to one index.

10. The method according to claim 9, wherein
the index of the resource unit to which the first resource belongs is determined based on a first identifier in the first information, and the first identifier is a source identifier or a destination identifier of to-be-sent data, or an identifier of the first reference signal.

11. The method according to claim 9, wherein
the index of the resource unit to which the first resource belongs is indicated by a first identifier in the first information and fourth indication information and/or fifth indication information in the first information, the fourth indication information indicates a time domain offset, the time domain offset is an offset of the first resource in the time domain relative to a resource unit corresponding to the first identifier, the fifth indication information indicates a frequency domain offset, the frequency domain offset is an offset of the first resource in the frequency domain relative to the resource unit corresponding to the first identifier, and the fourth indication information comprises information indicating that the time domain offset is before or after the first resource in time domain; and
the first identifier is a source identifier or a destination identifier of to-be-sent data, or an identifier of the first reference signal.

12. The method according to claim 11, wherein the method further comprises:
receiving second sidelink control information, wherein a resource unit determined based on the second sidelink control information is the same as the resource unit corresponding to the first identifier.

13. The method according to any one of claims 9 to 12, wherein the first information further comprises sixth indication information, and the sixth indication information, when set to a first value, indicates that the index of the resource unit to which the first resource belongs is determined based on the first identifier.

14. The method according to any one of claims 9 to 13, wherein the method further comprises:
obtaining first configuration information, wherein the first configuration information is used to configure the first resource set, and the first configuration information comprises information about a mapping relationship between positions and indexes of the plurality of resource units.

15. The method according to any one of claims 1 to 14, wherein the first sidelink reference signal comprises a plurality of sidelink reference signals, at least one time domain sub-unit within a time domain unit contained in the first resource is used to send part or all of the plurality of sidelink reference signals, and sidelink reference signals carried in different time domain sub-units in the at least one time domain sub-unit correspond to a same beam direction or different beam directions.

16. The method according to any one of claims 1 to 15, wherein the first reference signal is a sidelink SL channel state information reference signal CSI-RS and/or an SL demodulation reference signal DMRS.

17. A communication method, applied to a second terminal device, wherein the method comprises:
receiving first information, wherein the first information indicates a first resource, the first resource is used to send a first reference signal, the first resource belongs to a first resource set, and the first resource set is a resource set used to send a reference signal; and
receiving the first sidelink reference signal on the first resource.

18. The method according to claim 17, wherein the method further comprises:
determining a communication beam between the first terminal device and the second terminal device based on the first sidelink reference signal.

19. The method according to claim 17 or 18, wherein the first resource comprises a first sub-resource and a second sub-resource, the first information comprises first indication information and second indication information, the first indication information indicates a time domain resource position of the first sub-resource, and the second indication information indicates a time interval between a time domain resource of the first sub-resource and a time domain resource of the second sub-resource.

20. The method according to claim 19, wherein
the first indication information is carried in an SFN or a DFN, and the SFN or the DFN indicates the time domain position of the first sub-resource; and
the second indication information is carried in a time offset field, and the time offset field indicates the time interval between the time domain resource of the first sub-resource and the time domain resource of the second sub-resource.

21. The method according to any one of claims 17 to 20, wherein
the first resource is a periodic resource, and the first information further indicates a periodicity of the first resource.

22. The method according to any one of claims 17 to 21, wherein the first information comprises third indication information, and the third indication information indicates a starting frequency domain position of a frequency domain resource of the first resource.

23. The method according to claim 22, wherein the third indication information further indicates a quantity of frequency domain units occupied by the first resource.

24. The method according to claim 22 or 23, wherein
the first information is contained in first SCI or a first MAC CE.

25. The method according to claim 17 or 18, wherein the first information indicates an index of a resource unit to which the first resource belongs, the first resource set comprises a plurality of resource units, and each of the plurality of resource units corresponds to one index.

26. The method according to claim 25, wherein
the index of the resource unit to which the first resource belongs is determined based on a first identifier in the first information, and the first identifier is a source identifier or a destination identifier of to-be-sent data, or an identifier of the first reference signal.

27. The method according to claim 25, wherein
the index of the resource unit to which the first resource belongs is indicated by a first identifier in the first information and fourth indication information and/or fifth indication information in the first information, the fourth indication information indicates a time domain offset, the time domain offset is an offset of the first resource in the time domain relative to a resource unit corresponding to the first identifier, the fifth indication information indicates a frequency domain offset, the frequency domain offset is an offset of the first resource in the frequency domain relative to the resource unit corresponding to the first identifier, and the fourth indication information comprises information indicating that the time domain offset is before or after the first resource in time domain; and
the first identifier is a source identifier or a destination identifier of to-be-sent data, or an identifier of the first reference signal.

28. The method according to any one of claims 25 to 27, wherein the first information further comprises sixth indication information, and the sixth indication information, when set to a first value, indicates that the index of the resource unit to which the first resource belongs is determined based on the first identifier.

29. The method according to any one of claims 25 to 28, wherein the method further comprises:
obtaining first configuration information, wherein the first configuration information is used to configure the first resource set, and the first configuration information comprises information about a mapping relationship between positions and indexes of the plurality of resource units.

30. The method according to any one of claims 17 to 29, wherein the first sidelink reference signal comprises a plurality of sidelink reference signals, at least one time domain sub-unit within a time domain unit contained in the first resource is used to send part or all of the plurality of sidelink reference signals, and sidelink reference signals carried in different time domain sub-units in the at least one time domain sub-unit correspond to a same beam direction or different beam directions.

31. The method according to any one of claims 17 to 30, wherein the first reference signal is an SL CSI-RS and/or an SL DMRS.

32. A communication apparatus, wherein the communication apparatus comprises a processing unit and a transceiver unit, and the processing unit is coupled to the transceiver unit, to perform the method according to any one of claims 1 to 16, or perform the method according to any one of claims 17 to 31.

33. A communication apparatus, wherein the communication apparatus comprises a processor and a memory, the memory is configured to store a computer program, and the processor is configured to execute the computer program stored in the memory, to enable the communication apparatus to perform the method according to any one of claims 1 to 16, or enable the communication apparatus to perform the method according to any one of claims 17 to 31.

34. A computer-readable storage medium, wherein the computer-readable storage medium is configured to store a computer program, and when the computer program is run on a computer, the computer is enabled to perform the method according to any one of claims 1 to 16, or the computer is enabled to perform the method according to any one of claims 17 to 31.

35. A computer program product, wherein the computer program product comprises a computer program, and when the computer program is run on a computer, the computer is enabled to perform the method according to any one of claims 1 to 16, or the computer is enabled to perform the method according to any one of claims 17 to 31.

36. A chip system, wherein the chip system comprises:
a processor and an interface, wherein the processor is configured to invoke instructions from the interface and run the instructions, and when the processor executes the instructions, the method according to any one of claims 1 to 16 is implemented, or the method according to any one of claims 17 to 31 is implemented.

37. A communication system, wherein the communication system comprises a first terminal device and a second terminal device, wherein
the first terminal device is configured to perform the method according to any one of claims 1 to 16; and
the second terminal device is configured to perform the method according to any one of claims 17 to 31.
